# EUROPEAN PATENT APPLICATION

(11) **EP 4 651 394 A1**
(43) Date of publication of application: **19.11.2025**
(21) Application number: 23915301.8
(22) Date of filing: 10.01.2023
(51) Int. Cl.: H04B 7/0417, H04W 24/10

(54) **METHOD FOR DETERMINING CHANNEL STATE INFORMATION ACQUISITION SOLUTION, AND DEVICE**

(71) Applicant: GUANGDONG OPPO MOBILE TELECOMMUNICATIONS CORP., LTD., Dongguan, Guangdong 523860 (CN)
(72) Inventor: ZHENG, Xufei, Dongguan, Guangdong 523860 (CN)
(74) Representative: Taor, Simon Edward William
(86) International application number: PCT/CN2023/071734
(87) International publication number: WO 2024/148525

(57) **Abstract**

The present application relates to a method for determining a channel state information (CSI) acquisition solution, and a terminal device and a network device. The method comprises: a network device determines a CSI acquisition solution corresponding to communication scenario information, wherein the communication scenario information comprises a scenario to which a wireless communication environment between the network device and a terminal device belongs. According to embodiments of the present application, the corresponding CSI acquisition solution can be obtained on the basis of the communication scenario information, and the CSI acquisition solution can be better matched with the wireless communication environment, so that the CSI acquisition solution achieves better performance.

## Description

### TECHNICAL FIELD

The present disclosure relates to the field of communications, in particular, to a method for determining a channel-state information (CSI) acquisition scheme and a device.

### BACKGROUND

A multiple-input multiple-output (MIMO) technology plays an important role in a long term evolution (LTE) system and a new radio (NR) system, and the MIMO technology will still be one of the key enabling technologies in the next generation wireless communication system in the future. Signal transmission performance of the MIMO greatly depends on an accuracy of a transmitter side acquiring the CSI.

### SUMMARY

Embodiments of the present disclosure provide a method for determining a CSI acquisition scheme and a device, which can make the CSI acquisition scheme more adaptable to a wireless communication environment.

There is provided a method for determining a CSI acquisition scheme in an embodiment of the present disclosure, the method includes the following operation. A network device determines the CSI acquisition scheme corresponding to communication scenario information, the communication scenario information including a scenario to which a wireless communication environment between the network device and a terminal device belongs.

There is provided a method for determining a CSI acquisition scheme in an embodiment of the present disclosure, the method includes the following operation.

A terminal device determines the CSI acquisition scheme corresponding to communication scenario information, the communication scenario information including a scenario to which a wireless communication environment between the terminal device and a network device belongs.

There is provided a network device in an embodiment of the present disclosure, the network device includes a first processing unit.

The first processing unit is configured to determine a CSI acquisition scheme corresponding to communication scenario information, the communication scenario information including a scenario to which a wireless communication environment between the network device and a terminal device belongs.

There is provided a terminal device in an embodiment of the present disclosure, the terminal device includes a first processing unit.

The first processing unit is configured to determine a CSI acquisition scheme corresponding to communication scenario information, the communication scenario information including a scenario to which a wireless communication environment between the terminal device and a network device belongs.

There is provided a network device in an embodiment of the present disclosure, the network device includes a processor and a memory. The memory is configured to store a computer program, and the processor is configured to call the computer program stored in the memory and run the computer program, to enable the network device to perform the above method for determining a CSI acquisition scheme.

There is provided a terminal device in an embodiment of the present disclosure, the network device includes a processor and a memory. The memory is configured to store a computer program, and the processor is configured to call the computer program stored in the memory and run the computer program, to enable the terminal device to perform the above method for determining a CSI acquisition scheme.

There is provided a chip in an embodiment of the present disclosure, the chip is configured to perform the above method for determining a CSI acquisition scheme. Specifically, the chip includes a processor, and the processor is configured to call a computer program stored in a memory and run the computer program, to cause a device having mounted thereon to perform the above method for determining a CSI acquisition scheme.

There is provided a computer-readable storage medium in an embodiment of the present disclosure, and the computer-readable storage medium has stored thereon a computer program. The computer program, when being run by a device, causes the device to perform the above method for determining a CSI acquisition scheme.

There is provided a computer program product in an embodiment of the present disclosure, and the computer program product includes computer program instructions. The computer program instructions are run by a computer to perform the above method for determining a CSI acquisition scheme.

There is provided a computer program in an embodiment of the present disclosure, the computer program, when being run on a computer, causes the computer to perform the above method for determining a CSI acquisition scheme.

According to the embodiments of the present disclosure, a CSI acquisition scheme corresponding to communication scenario information may be obtained based on the communication scenario information, which can make the CSI acquisition scheme more adaptable to the wireless communication environment, so that performance of the CSI acquisition scheme can be better.

### BRIEF DESCRIPTION OF THE DRAWINGS

FIG. 1 is a schematic diagram of an application scenario according to an embodiment of the present disclosure.
FIG. 2 is a schematic diagram of a basic flow for CSI acquisition.
FIG. 3 is a schematic diagram of a basic architecture of CSI feedback.
FIG. 4 is a schematic diagram of an artificial intelligence (AI)-based CSI feedback scheme.
FIG. 5 is a schematic flowchart of a method for determining a CSI acquisition scheme according to an embodiment of the present disclosure.
FIG. 6 is a schematic flowchart of a method for determining a CSI acquisition scheme according to another embodiment of the present disclosure.
FIG. 7 is a schematic flowchart of a method for determining a CSI acquisition scheme according to another embodiment of the present disclosure.
FIG. 8 is a schematic flowchart of a method for determining a CSI acquisition scheme according to another embodiment of the present disclosure.
FIG. 9 is a schematic flowchart of a method for determining a CSI acquisition scheme according to another embodiment of the present disclosure.
FIG. 10 is a schematic flowchart of a method for determining a CSI acquisition scheme according to another embodiment of the present disclosure.
FIG. 11 is a schematic flowchart of a method for determining a CSI acquisition scheme according to another embodiment of the present disclosure.
FIG. 12 is a schematic flowchart of a method for determining a CSI acquisition scheme according to another embodiment of the present disclosure.
FIG. 13 is a schematic flowchart of a method for determining a CSI acquisition scheme according to another embodiment of the present disclosure.
FIG. 14 is a schematic diagram of a base station performing scenario recognition based on uplink channel information.
FIG. 15 is a schematic diagram of a base station performing scenario recognition based on CSI information fed back by user equipment (UE).
FIG. 16 is a schematic diagram of an exemplary model adaptation process.
FIG. 17A and FIG. 17B are schematic diagrams of processing manners after UE performs scenario recognition.
FIG. 18 is a schematic diagram of UE performing scenario recognition based on a downlink channel measurement result.
FIG. 19 is a schematic diagram of AI model-based channel estimation and CSI feedback.
FIG. 20 is a schematic block diagram of a network device according to an embodiment of the present disclosure.
FIG. 21 is a schematic block diagram of a network device according to another embodiment of the present disclosure.
FIG. 22 is a schematic block diagram of a terminal device according to an embodiment of the present disclosure.
FIG. 23 is a schematic block diagram of a terminal device according to another embodiment of the present disclosure.
FIG. 24 is a schematic block diagram of a communication device according to an embodiment of the present disclosure.
FIG. 25 is a schematic block diagram of a chip according to an embodiment of the present disclosure.
FIG. 26 is a schematic block diagram of a communication system according to an embodiment of the present disclosure.

### DETAILED DESCRIPTION

The solution of embodiments of the present disclosure will be described with reference to the accompanying drawings of the embodiments of the present disclosure.

The technical solution of the embodiments of the present disclosure be applied to various communication systems, such as: a global system of mobile communication (GSM) system, a code division multiple access (CDMA) system, a wideband CDMA (WCDMA) system, a general packet radio service (GPRS), a long term evolution (LTE) system, an advanced LTE (LTE-A) system, an NR system, an evolution system of NR system, an LTE-based access to unlicensed spectrum (LTE-U), an NR-based access to unlicensed spectrum (NR-U), a non-terrestrial networks (NTN) system, a universal mobile telecommunications system (UMTS), a wireless local area network (WLAN), a wireless fidelity (WiFi), a 5th generation (5G) system or other communication systems, etc.

Generally, the number of connections supported by the traditional communication system support is limited and the connections are easy to be implemented. However, with the development of communication technology, the mobile communication system will not only support traditional communications, but also support, for example, a device to device (D2D) communication, a machine to machine (M2M) communication, a machine type communication (MTC), a vehicle to vehicle (V2V) communication, or the V2X communication, etc. Embodiments of the present application may also be applied to these communication systems.

In an implementation, the communication system in the embodiments of the present disclosure may be applied to a carrier aggregation (CA) scenario, a dual connectivity (DC) scenario, and a standalone (SA) network distribution scenario.

In an implementation, the communication system in the embodiments of the present disclosure may be applied to an unlicensed spectrum. The unlicensed spectrum may also be considered as a shared spectrum. Optionally, the communication system in the embodiments of the present disclosure may also be applied to a licensed spectrum. The licensed spectrum may also be considered as an unshared spectrum.

Various embodiments are described in combination with a network device and a terminal device in the embodiments of the present disclosure. The terminal device may be called UE, an access terminal, a subscriber unit, a subscriber station, a mobile station, a mobile console, a remote station, a remote terminal, a mobile device, a user terminal, a terminal, a wireless communication device, a user agent, or user apparatus.

The terminal device may be a station (ST) in the WLAN, and may be a cellular phone, a cordless phone, a session initiation protocol (SIP) phone, a wireless local loop (WLL) station, a personal digital assistant (PDA) device, a handheld device with a wireless communication function, a computing device, another processing device connected to a wireless modem, an on-board device, a wearable device, a terminal device in a next generation communication system such as the NR network, or a terminal device in a future evolved public land mobile network (PLMN) or the like.

In an embodiment of the present disclosure, the terminal device may be deployed on land, including indoors or outdoors, hand-held, wearable or vehicle-mounted; ow may also be deployed on the water (such as ships); or may also be deployed in the air (such as airplanes, balloons and satellites).

In an embodiment of the present disclosure, the terminal device may be a mobile phone, a tablet computer (pad), a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home, etc.

By way of example but not limitation, in an embodiment of the present disclosure, the terminal device may also be a wearable device. The wearable device may also be referred to as a wearable smart device, which is a general name of wearable devices developed by applying wearable technology and intelligently designing daily wear, such as glasses, gloves, watches, clothing and shoes. The wearable device is a portable device that is worn directly on the body or integrated into the clothes or accessories of users. The wearable device is not only a hardware device, but also realizes powerful functions through software support, data interaction and cloud interaction. The generalized wearable smart device may have comprehensive functions, a large size and a function of realizing whole or partial functions without relying on a smart phone, such as a smart watch or smart glasses, and may only focus on certain application functions and need to be used in conjunction with another device such as a smart phone, these kind of wearable smart devices may include various smart bracelets and smart jewelry for monitoring vital signs.

In an embodiment of the present disclosure, the network device may be a device for communicating with a mobile device. The network device may be an access point (AP) in the WLAN, a base transceiver station (BTS) in the GSM or CDMA, a base station NodeB (NB) in a WCDMA, an Evolved Node B (eNB or eNodeB) in the LTE, or a relay station or an AP, or a vehicle-mounted device, a wearable device, a network device (gNB) in the NR network, or a network device in the future evolved PLMN network or a network device in the NTN network, etc.

By way of example and not limitation, in an embodiment of the present disclosure, the network device may have a mobility characteristic, for example the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. Optionally, the network device may also be a base station arranged on land, water and the like.

In an embodiment of the present disclosure, the network device may provide services for a cell, and the terminal device communicates with the network device through transmission resources (e.g. frequency-domain resources or called spectrum resources) used by the cell. The cell may be a cell corresponding to the network device such as a base station, and may belong to a macro base station or a base station corresponding to a small cell which may include: a metro cell, a micro cell, a pico cell, a femto cell, etc. These small cells have the characteristics of small coverage and low transmission power, and are suitable for providing high-speed data transmission services.

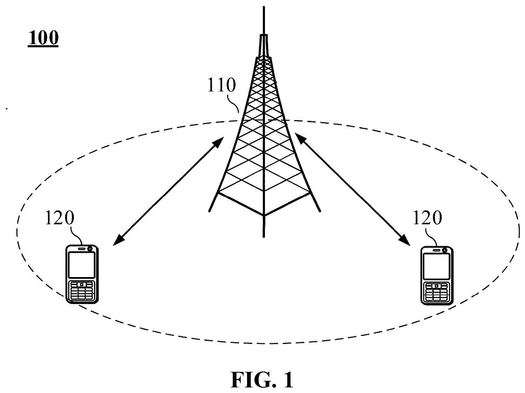

FIG. 1 exemplarily illustrates a communication system 100. The communication system includes a network device 110 and two terminal devices 120. In an implementation, the communication system 100 may include a plurality of network devices 110 and a coverage of each network device 110 may include another number of terminal devices 120, which is not limited in the embodiments of the present disclosure.

In an implementation, the communication system 100 may further include other network entities such as a mobility management entity (MME), an access and mobility management function (AMF), which is not limited in the embodiments of the present disclosure.

The network device may include an access network device and a core network device. That is, the wireless communication system further includes a plurality of core networks for communicating with the access network device. The access network device may be an evolutional node B (abbreviated as eNB or e-NodeB), a macro base station, a micro base station (also referred to as a "small base station"), a pico base station, an AP, a transmission point (TP) or a new generation Node B (gNodeB), or the like in an LTE system, a next generation mobile communication (NR) system or an authorized auxiliary access long-term evolution (LAA-LTE) system.

It should be understood that, a device in the network/system of embodiments of the present disclosure having a communication function may be referred to as a communication device. Taking the communication system illustrated in FIG. 1 as an example, a communication device may include a network device and a terminal device which have a communication function. The network device and the terminal device may be specific devices in the embodiments of the present disclosure, details are not elaborated herein again. The communication device may further include other devices in the communication system, such as a network controller, an MME or the like, which is not limited in the embodiments of the present disclosure.

It should be understood that, terms "system" and "network" in the present disclosure are usually interchangeably used. The term "and/or" herein is only used to describe an association relationship between the associated objects, and represents that three relationships may exist. For example, A and/or B may represent the three conditions: independent existence of A, existence of both A and B and independent existence of B. In addition, the character "/" in the present disclosure usually represents that previous and next associated objects form an "or" relationship

It should also be understood that the word "indication" mentioned in embodiments of the present disclosure may be a direct indication or an indirect indication, and may also be indicative of a relationship. For example, A indicates B, which may represent that A directly indicates B, for example, B may be obtained through A; or that A indirectly indicates B, for example, A indicates C, and B may be obtained through C; or that there is an association between A and B.

The word "correspondence" in embodiments of the present disclosure may represent that the listed items have a direct or indirect correspondence relationship, or an association relationship, or a relationship of indicating and being indicated, configured and being configured, etc.

For convenience of understanding the technical solutions of the embodiments of the present disclosure, related technologies in embodiments of the present disclosure are described. The following related technologies used as optional solutions may be combined with technical solution of the embodiments of the present disclosure in various ways. Such combinations fall within the scope of protection of the embodiments of the present disclosure.

### 1. CSI acquisition mechanism in cellular communication system

In a cellular communication system, a specific manner for a base station to acquire CSI may vary depending on a duplex communication mode employed. Specifically, in a time-division duplex (TDD) mode, because both uplink and downlink operate on a same frequency, a base station may obtain the CSI by using channel reciprocity between the uplink channel and the downlink channel. That is, the base station may directly estimate the CSI, that may be used for guiding downlink data transmission, based on an uplink reference signal (RS) (such as a sounding reference signal (SRS)) transmitted by a terminal device (i.e., UE). In contrast, in a frequency-division duplex (FDD) mode, because the uplink and downlink operate at different frequencies, the base station may not directly estimate the downlink CSI based on the uplink RS by using the channel reciprocity. Therefore, the CSI acquisition may be much more complicated. Firstly, the base station may configure some reference signals for the UE and transmit the reference signals to the UE, for the UE to complete CSI measurement, the reference signal may be a synchronization signal and a physical broadcast channel (PBCH) block (SSB) or a channel state information-reference signal (CSI-RS). Further, the UE completes channel estimation by measuring the above reference signal and feeds back CSI information to the base station, so that the base station may configure a reasonable and efficient data transmission mode based on THE current channel situation.

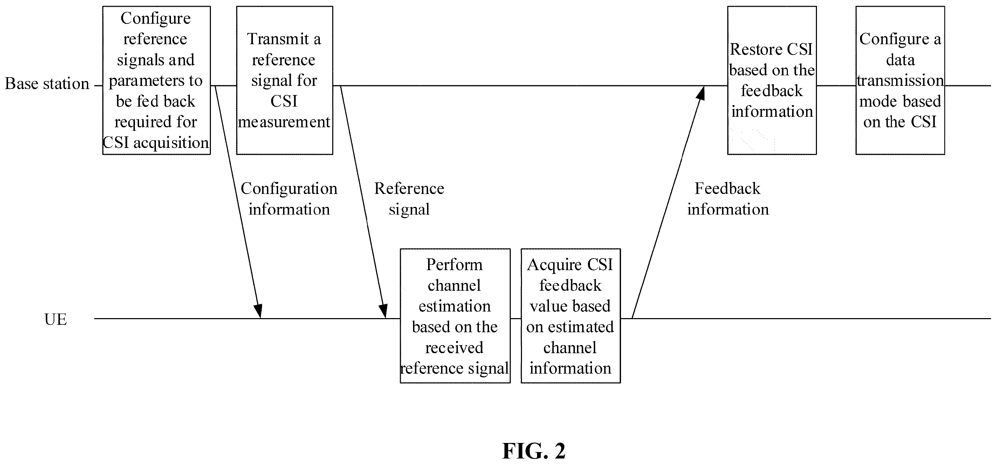

In the NR standard, in order to realize CSI feedback from the UE to the base station, multiple sets of codebooks are standardized and defined. The UE may search for codeword, from the codebook, which best matches the CSI to be fed back, and feeds back an index corresponding to the codeword to the base station through the uplink. The base station may restore the CSI by the index based on the same codebook. A basic flow of CSI acquisition in the FDD is illustrated in FIG. 2. The base station transmits configuration information to the UE, to configure the reference signals, parameters to be fed back, and the like, required for CSI acquisition. The base station transmits a reference signal to the UE for CSI measurement. After the UE performs the channel estimation based on the received reference signal, the UE acquires the CSI feedback value based on estimated channel information. The UE transmits feedback information to the base station. The base station restores the CSI based on the feedback information, and configures a data transmission mode based on the CSI.

### 2. AI-based CSI feedback method

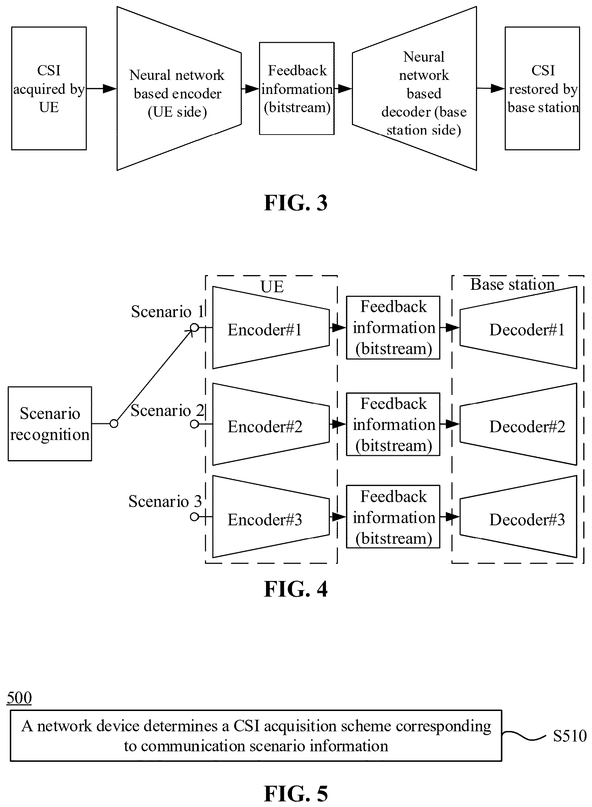

A basic architecture of high-precision CSI feedback in the FDD mode by using the AI technology is ilustrated in FIG. 3. The UE may transform acquired CSI information into indication information (i.e., bitstream) that may be fed back through an uplink channel by using an encoder of a pre-trained neural network. The base station, after receiving the indication information, may use the corresponding trained neural network decoder to restore the indication information to the CSI information. The closer the CSI recovered by the base station is to the CSI obtained by the UE, the better the performance of the neural network model is.

For the traditional CSI feedback scheme in the FDD mode, the current wireless communication system generally builds a sufficiently fine codebook by theoretically modeling the actual communication environment. However, with increasing of requirements for flexibility, adaptability and system capacity of wireless communication systems, a gain space brought by the traditional wireless communication system design and optimization methods based on classical mathematical model theory is gradually narrowing. At present, it is necessary to adopt new ideas and methods, such as combining a data driven based AI technology with traditional theories and system design methods, to break the existing bottleneck and further improve the performance of the wireless systems.

For example, compared with the traditional CSI acquisition scheme, the AI-based CSI feedback scheme has higher feedback accuracy and lower feedback overhead because the AI-based CSI feedback scheme utilizes powerful nonlinear fitting, compression, and recovery capability of a neural network.

Most of the current AI-based CSI feedback schemes directly use a model trained in an offline phase in online compression, feedback and recovery of the CSI. However, since the AI-based CSI feedback scheme is a data-driven solution, the characteristic of the AI-based CSI feedback scheme is that it can obtain good performance for familiar scenarios (such as a scenario where the AI model was subjected to during the training phase or a scenario similar to this scenario). For non-familiar scenarios, performance of the AI-based CSI feedback scheme cannot be ensured, that is, a generalization ability of the AI-based CSI feedback scheme is poor. However, a good generalization capability is necessary for the AI-based CSI feedback scheme, because the characteristic of a wireless scenario where the UE is located may change greatly as the UE continues to move in the cellular system. In order to solve the above problem, the following manners may be adopted. The first manner is to design and train a powerful AI model, to enable the AI model to be applied to various potential wireless scenarios. However, such a powerful AI model may require a high training cost and have operating complexity. Considering that the UE generally only has very limited computing resources and restrictions on energy consumption may be high, implementation of the first manner is doubtful. The second manner is to design and train several lightweight AI models. Different AI models are adaptable for different types of application scenarios such as an urban street, a village, an indoor place. As illustrated in FIG. 4, scenario 1 has an encoder #1 and a decoder #1, scenario 2 has an encoder #2 and a decoder #2, and scenario 3 has an encoder #3 and a decoder #3. However, it is a major difficulty in implementing this manner of how the base station and UE synchronously perform accurate model switching according to different scenarios. Related scenario recognition technologies are generally applied in the field of computer visions, but not in the field of wireless communication systems.

FIG. 5 is a schematic flowchart of a method 500 for determining a CSI acquisition scheme according to an embodiment of the present disclosure. Optionally, the method may be applied to the system illustrated in FIG. 1, but it is not limited thereto. The method includes at least part of the following contents.

At S510, a network device determines a CSI acquisition scheme corresponding to communication scenario information. The communication scenario information includes a scenario to which a wireless communication environment between the network device and a terminal device belongs.

In an embodiment of the present disclosure, the scenario to which the wireless communication environment between the network device and the terminal device belongs may include, but is not limited to, a street, an indoor, countryside, an urban area, a village, and the like. The communication scenario information may include information such as a name and an identity of the scenario such as a street, an indoor, countryside, an urban area, or a village. For example, the name of the street scenario is "Street" and the identity is "1"; the name of the indoor scenario is "Indoor" and the identity is "2". Different scenarios may correspond to different CSI acquisition schemes. For example, the street corresponds to a CSI acquisition scheme A, the indoor corresponds to a CSI acquisition scheme B, and the countryside corresponds to a CSI acquisition scheme C. The network device may determine, based on the name "Street" or the identity "1" of the street scenario, that the network device currently needs to use the CSI acquisition scheme A or to switch to the CSI acquisition scheme A. In the embodiments of the present disclosure, the CSI acquisition scheme corresponding to the communication scenario information may be obtained based on the communication scenario information, which can make the CSI acquisition scheme more adaptable to the wireless communication environment, so that the performance of the CSI acquisition scheme can be better.

In some implementations, the CSI acquisition scheme includes: an AI model for CSI acquisition and/or a non-AI feedback scheme for CSI acquisition. The AI model for CSI acquisition includes at least one of:
a CSI feedback model; or
a channel estimation model.

In an embodiment of the present disclosure, a process for the CSI acquisition may include stages such as channel measurement, channel estimation, and CSI feedback.

In an embodiment of the present disclosure, if the AI model used for CSI acquisition is a CSI feedback model, specific contents of the CSI feedback model of the terminal device and the network device may be different or the same. For example, the terminal device may include an encoder of the CSI feedback model, and the network device may include a decoder of the CSI feedback model. In another example, the terminal device may include an encoder and a decoder of the CSI feedback model, and the network device may include a decoder of the CSI feedback model.

In an embodiment of the present disclosure, if the AI model used for the CSI acquisition is a channel estimation model, the terminal device and the network device may include a same channel estimation model.

In an embodiment of the present disclosure, there may be a plurality of non-AI feedback schemes for the CSI acquisition, for example, a codebook-based feedback scheme. Codebook types that can be configured may include Type 1, Type 2, enhanced Type 2, and the like.

In an embodiment of the present disclosure, the network device may select the CSI acquisition scheme independently, or may determine the CSI acquisition scheme of the network device based on the CSI acquisition scheme selected by the terminal device. These manners are introduced below respectively.

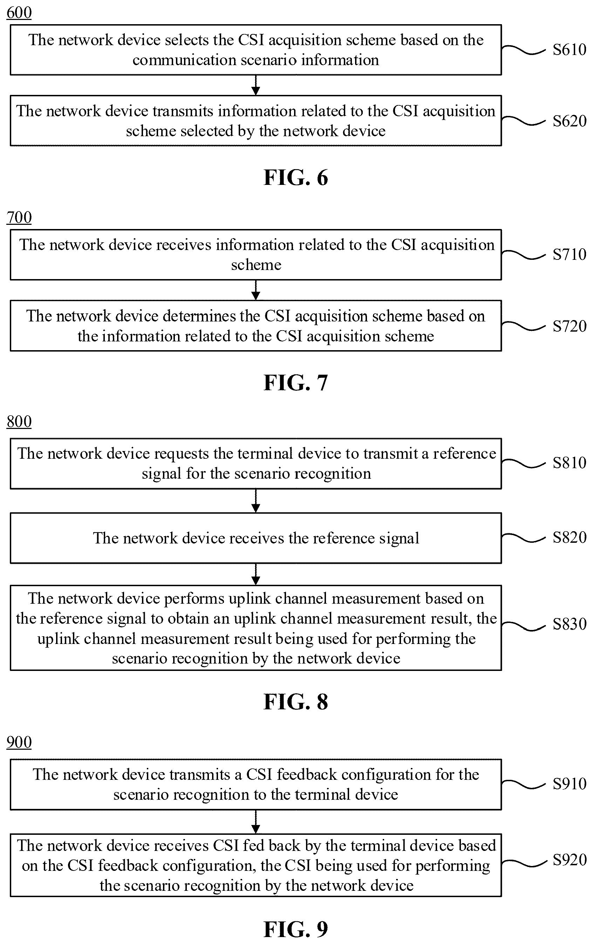

In an implementation, as illustrated in FIG. 6, in the method 600, if the network device selects the CSI acquisition scheme independently, the operation S510 may include an operation S610.

At S610, the network device selects the CSI acquisition scheme based on the communication scenario information.

In an implementation, as illustrated in FIG. 6, the method 600 further includes an operation S620.

At S620, the network device transmits information related to the CSI acquisition scheme selected by the network device.

In an implementation, the information related to the CSI acquisition scheme is for indicating at least one of:
an identity (ID) of a CSI feedback model;
an ID of an encoder of a CSI feedback model;
an ID of a decoder of a CSI feedback model; or
an ID of a channel estimation model.

In an embodiment of the present disclosure, the network device may transmit, after independently selecting the CSI acquisition scheme, the information related to the selected CSI acquisition scheme to the terminal device. For example, if the network device selects the CSI feedback model based on the communication scenario information, the network device may transmit the ID of the CSI feedback model to the terminal device. If the network device selects the decoder of the CSI feedback model based on the communication scenario information, the network device may transmit the ID of the decoder of the CSI feedback model and/or an ID of an encoder corresponding to the decoder to the terminal device. If the network device selects the channel estimation model based on the communication scenario information, the network device may transmit the ID of the channel estimation model to the terminal device. If the network device selects codebook information based on the communication scenario information, the network device may transmit a bit map, and the like, to the terminal device, to indicate a type of the codebook.

In an embodiment of the present disclosure, the information related to the CSI acquisition scheme may explicitly or implicitly indicate the name or the ID of the model. For example, the information related to the CSI acquisition scheme includes the ID of the model, the ID of the encoder, or the ID of the decoder, which is an explicit indication manner. For another example, the fact that a certain bit of a character string included in the information related to the CSI acquisition scheme is 0 may implicitly indicate a default model.

In an implementation, the information related to the CSI acquisition scheme is carried by at least one of:
a radio resource control (RRC) message, a media access control control element (MAC CE), or downlink control information (DCI).

For example, the RRC message, the MAC CE, or the DCI transmitted by the network device to the terminal device carries the information related to the CSI acquisition scheme.

In an implementation, as illustrated in FIG. 7, on the basis of any one of the methods in the above embodiments, in the method 700, if the terminal device selects the CSI acquisition scheme, the operation S510 may include operations S710 and S720.

At S710, the network device receives information related to the CSI acquisition scheme.

At S720, the network device determines the CSI acquisition scheme based on the information related to the CSI acquisition scheme.

In an embodiment of the present disclosure, the terminal device may transmit, after selecting the CSI acquisition scheme, the information related to the selected CSI acquisition scheme to the network device. If the network device receives the ID of the CSI feedback model selected by the terminal device, the network device may determine the CSI feedback model of the network device based on the ID of the CSI feedback model. If the network device receives the ID of the decoder of the CSI feedback model selected by the terminal device, the network device may determine the decoder of the CSI feedback model and/or an encoder, corresponding to the decoder, of the network device based on the ID of the CSI feedback model. If the network device receives the ID of the encoder of the CSI feedback model selected by the terminal device, the network device may determine the encoder of the CSI feedback model and/or the decoder, corresponding to the encoder, of the network device based on the ID of the CSI feedback model. If the network device receives the ID of the channel estimation model selected by the terminal device, the network device may determine the channel estimation model of the network device based on the ID of the channel estimation model. If the network device receives the type of the codebook selected by the terminal device, the network device may determine the type of the codebook of the network device based on the type of the codebook.

In an implementation, the information related to the CSI acquisition scheme is carried by at least one of:
an RRC message, uplink control information (UCI), or a physical uplink shared channel (PUSCH).

For example, the RRC message, the UCI, or the PUSCH transmitted by the terminal device to the network device may carry the information related to the CSI acquisition scheme.

In an implementation, before S510, the method may include that: the network device acquires an ID of a CSI acquisition scheme that is allowed to be used. For example, the network device acquires at least one of: the encoder of the CSI feedback model, the decoder of the CSI feedback model, or the channel estimation model that is allowed to be used. The CSI feedback model and/or the channel estimation model have/has corresponding communication scenario information.

In an embodiment of the present disclosure, there may be a plurality of CSI acquisition schemes that are allowed to be used and acquired by the network device, such as a CSI acquisition scheme A, a CSI acquisition scheme B, and a CSI acquisition scheme C. The CSI acquisition scheme A corresponds to scenario 1, the CSI acquisition scheme B corresponds to scenario 2, and the CSI acquisition scheme C corresponds to scenario 3. The network device may acquire specific contents of the CSI acquisition scheme A, the CSI acquisition scheme B, and the CSI acquisition scheme C in advance. Then CSI acquisition scheme that needs to be used or switched is determined according to the communication scenario information. For example, the network device initially selects the CSI acquisition scheme A, and then switches from the CSI acquisition scheme A to the CSI acquisition scheme B according to the scenario 2.

In an implementation, the CSI feedback model and/or the channel estimation model are provided by the terminal device, predefined by a manufacturer, or provided by a third-party device. For example, the third-party device may include a model library in cloud or the like. The terminal device may acquire, from the model library in cloud, at least one of: the CSI feedback model, the encoder of the CSI feedback model, the decoder of the CSI feedback model, or the channel estimation model.

In an implementation, the method further includes an operation that: the network device interacts basic information of the CSI feedback model and/or the channel estimation model with the terminal device. The basic information of the CSI feedback model and/or the channel estimation model includes at least one of: the ID of the CSI feedback model, the ID of the encoder and the ID of the decoder, or the ID of the channel estimation model.

In an embodiment of the present disclosure, the network device may transmit the basic information of the CSI feedback model and/or the channel estimation model, that are currently applicable to the network device, to the terminal device. The network device may receive the basic information of the CSI feedback model and/or the channel estimation model currently applicable to the terminal device. In this way, the network device and the terminal device may inform each other of the basic information of the CSI acquisition scheme that they are allowed to be used. For example, the CSI acquisition schemes allowed to be used by the network device include CSI acquisition schemes A, B, C, D, and E, the CSI acquisition schemes allowed to be used by the terminal device UE1 include the CSI acquisition schemes A and B, and the CSI acquisition schemes allowed to be used by the terminal device UE2 include the CSI acquisition schemes C and D. The network device may transmit at least one of: the ID of the CSI feedback model, the ID of the encoder and the ID of the decoder, or the ID of the channel estimation model included in the CSI acquisition schemes A, B, C, D, and E to the terminal device UE1 and the terminal device UE2. The terminal device UE1 may transmit at least one of: the ID of the CSI feedback model, the ID of the encoder and the ID of the decoder, or the ID of the channel estimation model included in the CSI acquisition schemes A and B to the network device. The terminal device UE1 may transmit at least one of: the ID of the CSI feedback model, the ID of the encoder and the ID of the decoder, or the ID of the channel estimation model included in the CSI acquisition schemes C and D to the network device.

In an implementation, the basic information of the CSI feedback model and/or the channel estimation model is configured by at least one of:
an RRC message;
a broadcast message;
an MAC CE;
DCI; or
UCI.

For example, the RRC message, the broadcast message, the MAC CE, or the DCI transmitted by the network device to the terminal device may carry basic information of the CSI feedback model and/or the channel estimation model. For another example, the RRC message, the MAC CE, or the UCI transmitted by the terminal device to the network device may carry the basic information of the CSI feedback model and/or the channel estimation model.

In an implementation, the method further includes an operation that the network device triggers re-adaptation of the CSI acquisition scheme based on a first monitoring metric.

For example, the network device may determine whether the scenario needs to be changed based on whether some monitoring metrics satisfy a threshold value, and if the scenario needs to be changed, the network device may trigger itself to re-adapt the CSI acquisition scheme.

In an implementation, the method further includes an operation that: the network device transmits trigger information based on a first monitoring metric, the trigger information being used for triggering re-adaptation of the CSI acquisition scheme by the terminal device.

For example, the network device may determine whether the scenario needs to be changed based on whether some monitoring metrics satisfy a threshold value, and if the scenario needs to be changed, the network device may trigger the terminal device to re-adapt the CSI acquisition scheme.

In an implementation, the first monitoring metric includes at least one of:
data transmission performance;
position information of the terminal device;
a hybrid automatic repeat-request (HARQ) state; or
a channel quality condition.

For example, if the network device monitors that the position information of the UE changes greatly, the network device may determine that the scenario needs to be changed.

In an implementation, the data transmission performance includes a spectral efficiency and/or a data throughput rate of the terminal device.

For example, the data transmission performance monitored by the network device may be reflected by the data throughput rate, the spectral efficiency, or the like of the UE. If the data transmission performance is good, it may be determined that there is no need to change the scenario, and if the data transmission performance is poor, the scenario may need to be changed. Further, the network device may trigger the re-adaptation of the CSI acquisition scheme.

In an implementation, the HARQ state includes a number of HARQ retransmissions and/or a frequency of HARQ retransmissions of the terminal device.

In an implementation, if the network device detects that the number of HARQ retransmissions and/or the frequency of HARQ retransmissions initiated by the UE exceeds a certain threshold value, it may determine that the scenario needs to be changed. Further, the network device may trigger the re-adaptation of the CSI acquisition scheme.

In an implementation, the channel quality condition includes at least one of: a signal to noise ratio (SNR), a signal interference noise ratio (SINR), a reference signal receiving power (RSRP), a reference signal received quality (RSRQ), or a received signal strength indication (RSSI).

For example, if the network device monitors that at least one of the metrics (such as SNR, SINR, RSRP, RSRQ, or RSSI) of the channel quality condition in the current communication environment satisfies a certain threshold value, the network device may determine that the scenario needs to be changed. Further, the network device may trigger the re-adaptation of the CSI acquisition scheme.

In an embodiment of the present disclosure, the scenario recognition may be performed on the network device, or on the terminal device. These manners are introduced below respectively.

In an implementation, the method further includes an operation that: the network device performs scenario recognition on the wireless communication environment between the network device and the terminal device based on a second monitoring metric, to obtain the communication scenario information.

In an embodiment of the present disclosure, after the network device obtains the communication scenario information by performing the scenario recognition, the operation S610 may be performed, and the network device selects the CSI acquisition scheme corresponding to the communication scenario information.

In an implementation, the method further includes an operation that the network device transmits the communication scenario information.

In an embodiment of the present disclosure, after the network device obtains the communication scenario information by performing the scenario recognition, the communication scenario information may be transmitted to the terminal device, and the terminal device selects the CSI acquisition scheme corresponding to the communication scenario information. Then, the network device may wait for performing of operations S710 and S720, and the network device may determine CSI acquisition scheme of its own after receiving the information related to the CSI acquisition scheme.

In an implementation, the second monitoring metric includes at least one of:
uplink channel information;
position information of the terminal device; or
CSI fed back by the terminal device.

In an embodiment of the present application, the network device may process uplink channel information, position information of the terminal device, CSI fed back by the terminal device, and the like by using a scenario recognition model, to obtain the scenario to which the wireless communication environment between the network device and the terminal device belongs. For example, the network device performs the scenario recognition based on previous position information of the UE or by triggering the UE to report new position information. Alternatively, after the network device initiates positioning for the UE, the network device performs the scenario recognition based on the new position information of the UE.

In an implementation, as illustrated in FIG. 8, on the basis of any one of the methods in the above embodiments, the method 800 may further include operations S810 to S830.

At S810, the network device requests the terminal device to transmit a reference signal for the scenario recognition.

At S820, the network device receives the reference signal.

At S830, the network device performs uplink channel measurement based on the reference signal to obtain an uplink channel measurement result, the uplink channel measurement result being used for performing the scenario recognition by the network device.

In an embodiment of the present disclosure, the network device, such as a base station, may perform the scenario recognition based on uplink channel information. For example, the network device may request the UE to transmit an uplink RS through an RRC message, a MAC CE, a DCI, or the like. The uplink RS may be an RS dedicated to the scenario identification. Compared to a normal RS, the uplink RS may have a higher density and occupy a wider frequency band. After the UE transmits the RS to the base station based on the request, the base station may perform uplink channel measurement based on the received RS, to obtain uplink channel information. Further, the base station may perform the scenario recognition based on the uplink channel information.

In an implementation, as illustrated in FIG. 9, on the basis of any one of the methods in the above embodiments, the method 900 may further include operations S910 and S920.

At S910, the network device transmits a CSI feedback configuration for the scenario recognition to the terminal device.

At S920, the network device receives CSI fed back by the terminal device based on the CSI feedback configuration, the CSI being used for performing the scenario recognition by the network device.

In an embodiment of the present disclosure, the network device, such as a base station, may perform the scenario recognition based on the CSI fed back by the terminal device. The CSI is quantized downlink channel information. The base station may perform the scenario recognition based on the CSI previously fed back by the UE, or may perform a new CSI feedback configuration for the UE for the scenario recognition. For example, the base station transmits the CSI feedback configuration dedicated to the scenario recognition to the UE through the RRC message, the MAC CE, the DCI, or the like, to trigger the UE to feed back the CSI. The base station, after receiving the CSI fed back by the UE, may perform the scenario recognition based on the CSI.

In an implementation, the scenario recognition may not be performed on the network device, and in such situation, the method further includes an operation that the network device receives the communication scenario information. For example, the terminal device may perform the scenario recognition on the wireless communication environment between the network device and the terminal device, to obtain the communication scenario information. The network device receives the communication scenario information from the terminal device.

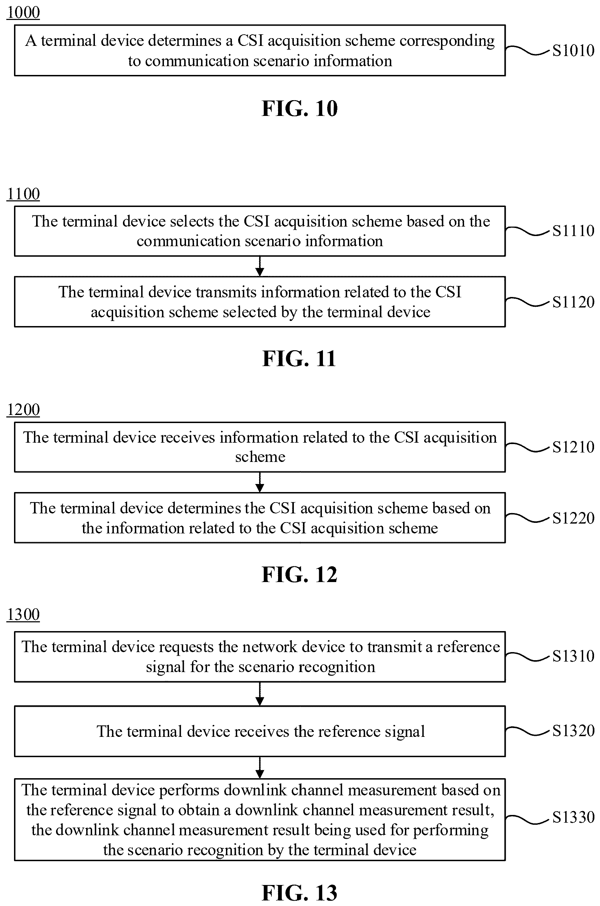

FIG. 10 is a schematic flowchart of a method 1000 for determining a CSI acquisition scheme according to an embodiment of the present disclosure. Optionally, the method may be applied to the system illustrated in FIG. 1, but it is not limited thereto. The method includes at least part of the following contents. The contents of the method performed by the terminal device which are the same as or correspond to that in the embodiments of the method performed by the network device, may refer to the relevant description for the network device.

At S1010, a terminal device determines a CSI acquisition scheme corresponding to communication scenario information, the communication scenario information including a scenario to which a wireless communication environment between the terminal device and a network device belongs.

In an embodiment of the present disclosure, if the communication is an uplink-downlink communication, the communication scenario information includes the scenario to which the wireless communication environment between the terminal device and the network device belongs. If the communication is a sidelink communication, the communication scenario information may include a scenario to which a wireless communication environment between the terminal device and another terminal device belongs.

In some implementations, the CSI acquisition scheme includes: an AI model for CSI acquisition and/or a non-AI feedback scheme for CSI acquisition. The AI model for CSI acquisition includes at least one of:
a CSI feedback model; or
a channel estimation model.

In an embodiment of the present disclosure, the terminal device may select the CSI acquisition scheme independently, or may determine the CSI acquisition scheme of the terminal device based on the CSI acquisition scheme selected by the network device. These manners are introduced below respectively.

In an implementation, as illustrated in FIG. 11, on the basis of any one of the methods in the above embodiments, in the method 1100, if the terminal device selects the CSI acquisition scheme, the operation S1010 may include an operation S1110.

At S1110, the terminal device selects the CSI acquisition scheme based on the communication scenario information.

In an implementation, as illustrated in FIG. 11, the method may further include an operation S1120.

At S1120, the terminal device transmits information related to the CSI acquisition scheme selected by the terminal device.

In an implementation, the information related to the CSI acquisition scheme is carried by at least one of:
an RRC message, UCI or a PUSCH.

For example, the RRC message, the UCI, or the PUSCH transmitted by the terminal device to the network device may carry the information related to the CSI acquisition scheme.

In an implementation, as illustrated in FIG. 12, on the basis of any one of the methods in the above embodiments, in the method 1200, if the network device selects the CSI acquisition scheme independently, the operation S1010 may include operations S1210 and S1220.

At S1210, the terminal device receives information related to the CSI acquisition scheme.

At S1220, the terminal device determines the CSI acquisition scheme based on the information related to the CSI acquisition scheme.

In an implementation, the information related to the CSI acquisition scheme is carried by at least one of: an RRC message, an MAC CE, or DCI.

For example, the RRC message, the MAC CE, or the DCI transmitted by the network device to the terminal device carries the information related to the CSI acquisition scheme.

In an implementation, the information related to the CSI acquisition scheme is for indicating at least one of:
an ID of a CSI feedback model;
an ID of an encoder of a CSI feedback model;
an ID of a decoder of a CSI feedback model; or
an ID of a channel estimation model.

In an implementation, the method may further include the operation that: the terminal device acquires at least one of: the encoder of the CSI feedback model, the decoder of the CSI feedback model, or the channel estimation model that is allowed to be used. The CSI feedback model and/or the channel estimation model have/has corresponding communication scenario information.

In an implementation, the CSI feedback model and/or the channel estimation model are provided by the network device, predefined by a manufacturer, or provided by a third-party device.

In an implementation, the method further includes the operation that: the terminal device interacts basic information of the CSI feedback model and/or the channel estimation model with the network device. The basic information of the CSI feedback model and/or the channel estimation model includes at least one of: an ID of the CSI feedback model, an ID of the encoder and an ID of the decoder, or an ID of the channel estimation model.

In an implementation, the basic information of the CSI feedback model and/or the channel estimation model is configured by at least one of:
an RRC message;
a broadcast message;
an MAC CE;
DCI; or
UCI.

In an implementation, the method further includes an operation that: the terminal device triggers re-adaptation of the CSI acquisition scheme based on a third monitoring metric.

For example, the terminal device may determine whether the scenario needs to be changed based on whether some monitoring metrics satisfy a threshold value, and if the scenario needs to be changed, the terminal device may trigger itself to re-adapt the CSI acquisition scheme.

In an implementation, the method further includes an operation that: the terminal device transmits trigger information based on the third monitoring metric, the trigger information being used for triggering re-adaptation of the CSI acquisition scheme by the network device.

For example, the terminal device may determine whether the scenario needs to be changed based on whether some monitoring metrics satisfy a threshold value, and if the scenario needs to be changed, the terminal device may trigger the network device to re-adapt the CSI acquisition scheme.

In an implementation, the third monitoring metric includes at least one of:
data transmission performance;
position information of the terminal device;
CSI model performance of the terminal device;
an HARQ state; or
a channel quality condition.

For example, if the UE detects that the position information of the UE changes greatly, the UE may determine that the scenario needs to be changed. For another example, if the UE has an encoder and a decoder of the CSI feedback model, the UE may obtain the performance of the CSI model based on similarity between an input to the encoder and an output of the decoder. If the performance of the CSI model is good, the UE may determine that the scenario does not need to be changed, and if the performance of the CSI model is poor, the UE may determine that the scenario needs to be changed. Further, the UE may trigger the re-adaptation of the CSI acquisition scheme.

In an implementation, the data transmission performance includes at least one of: a data throughput rate, a spectral efficiency, a block error rate (BLER), or a bit error rate (BER) of the terminal device.

For example, the data transmission performance monitored by the terminal device may be reflected by the data throughput rate, the spectral efficiency, the BLER, the BER or the like of the UE. If the data transmission performance is good, it may be determined that the scenario does not need to be changed, and if the data transmission performance is poor, the scenario may need to be changed. Further, the UE may trigger the re-adaptation of the CSI acquisition scheme.

In an implementation, the HARQ state includes a number of HARQ retransmissions and/or a frequency of HARQ retransmissions of the terminal device.

In an implementation, if the UE monitors that the number of HARQ retransmissions and/or the frequency of HARQ retransmissions initiated by itself exceeds a certain threshold value, it may determine that the scenario needs to be changed. Further, the UE may trigger the re-adaptation of the CSI acquisition scheme.

In an implementation, the channel quality condition includes at least one of: an SNR, an SINR, an RSRP, an RSRQ, or an RSSI.

For example, if the UE detects that at least one of the metrics (such as SNR, SINR, RSRP, RSRQ, or RSSI) of the channel quality condition in the current communication environment satisfies a certain threshold value, the UE may determine that the scenario needs to be changed. Further, the UE may trigger the re-adaptation of the CSI acquisition scheme.

In an implementation, the method further includes an operation that: the terminal device performs, based on a fourth monitoring metric, scenario recognition on the wireless communication environment between the terminal device and the network device, to obtain the communication scenario information.

In an implementation, the method further includes an operation that the terminal device transmits the communication scenario information.

In an implementation, the fourth monitoring metric includes at least one of:
downlink channel information;
position information of the terminal device; or
CSI model performance of the terminal device.

For example, if the UE has the encoder and the decoder of the CSI feedback model, the UE may obtain the performance of the CSI model based on similarity between an input to the encoder and an output of the decoder. If the performance of the CSI model is good, the UE may determine that the scenario does not need to be changed, and if the performance of the CSI model is poor, the UE may determine that the scenario needs to be changed. Further, the UE may trigger the re-adaptation of the CSI acquisition scheme.

In an implementation, as illustrated in FIG. 13, on the basis of any one of the methods in the above embodiments, the method 1300 may further include operations S1310 to S1330.

At S1310, the terminal device requests the network device to transmit a reference signal for the scenario recognition.

At S1320, the terminal device receives the reference signal.

At S1330, the terminal device performs downlink channel measurement based on the reference signal to obtain a downlink channel measurement result, the downlink channel measurement result being used for performing the scenario recognition by the terminal device.

In an embodiment of the present disclosure, the terminal device, such as the UE, may perform the scenario recognition based on uplink channel information. For example, the UE may request the terminal to transmit the downlink RS through an RRC message, UCI, or the like. The downlink RS may be an RS dedicated to the scenario identification. Compared to a normal RS, the downlink RS may have a higher density and occupy a wider frequency band. After the base station transmits the RS to the UE based on the request, the UE may perform the downlink channel measurement based on the received RS, to obtain downlink channel information. Further, the UE may perform the scenario recognition based on the downlink channel information.

In an implementation, the scenario recognition may not be performed on the terminal device, and in such situation, the method further includes an operation that the terminal device receives the communication scenario information. For example, the network device may perform the scenario recognition on the wireless communication environment between the network device and the terminal device, to obtain the communication scenario information. The terminal device receives the communication scenario information from the network device.

The specific examples of the method performed by the terminal device in the present embodiment may refer to the related description of the terminal device such as the UE in the above-described embodiments of the method performed by the terminal device, details will not be elaborated herein again for the sake of brevity.

The method for determining the CSI acquisition scheme according to the embodiments of the present disclosure is a method for adaption of a CSI feedback scheme based on the scenario recognition in the wireless communication system, so that the base station and the UE can, according to the characteristics of the wireless scenario in which the base station and the UE are located, dynamically switch to and apply the most adaptable and effective CSI acquisition scheme such as the CSI feedback scheme, thereby improving the system performance. Specifically, the method includes: (1) multi-scenario model acquisition and necessary information interaction; (2) trigger of model adaptation; (3) model selection based on scenario recognition, (4) model adaptation implementation, and trigger conditions and implementation mechanisms involved in various processes, etc.

Example 1: The base station serves as a decision-making entity to implement the CSI acquisition scheme such as CSI model adaptation.

In this example, multiple sets of CSI models adaptable for different wireless communication scenarios may be configured in both the base station and the UE, and the base station may serve as the decision-making entity to implement the wireless scenario recognition, to select the most suitable model to adapt to the current scenario. In an embodiment of the present disclosure, the CSI model may be referred to as a CSI feedback model, a CSI feedback AI model, or the like.

The overall process of the example includes: multi-scenario model acquisition and necessary information interaction, trigger of model adaptation, model selection based on scenario recognition performed by the base station, and model adaptation implementation, and so on.

### 1. Multi-scenario model acquisition and necessary information interaction

Because the AI-based CSI feedback scheme requires the base station and the UE to both maintain a matched encoder model and/or decoder model (as illustrated in FIG 3), multiple sets of models adaptable to different scenarios actually correspond to multiple sets of encoder and decoder models. In an embodiment of the present disclosure, there is no specific limitation on definition or division mode for the scenarios, and the degree of detail thereof depends on the specific implementations. For example, the potential scenario may include: a line of sight (LOS) scenario, a non-LOS (NLOS) scenario, a city street, countryside, an indoor, and the like.

In order to achieve the CSI model adaptation, firstly, both the UE and the base station need to maintain matched encoder and decoder models corresponding to multiple sets of scenarios. Different models may correspond to respective identification information (such as model ID), to facilitate indication in model switching. There are several manners for obtaining the model and an ID corresponding to the model.
a. Base station providing: the base station itself maintains multiple sets of models, and the base station configures the models and IDs corresponding to the models to the UE (for example, through an RRC message, a broadcast configuration, an MAC CE or DCI, etc.). The models configured by the base station to the UE may include only an encoder portion, or may include an encoder and a decoder.
b. Manufacturer predefinition: manufacturers of the base station and the UE predefine several matched models. In such situation, the UE needs to report the maintained model information and corresponding IDs to the base station (for example, through an RRC message, UCI, etc.) to realize alignment of model information between the base station and the UE.
c. Acquisition through a third party or an agreement

When multiple sets of models are maintained, the base station and the UE need to have a consensus on which set of models to be used by default. The default model may be indicated by the base station (e.g., through an RRC message, a broadcast configuration, an MAC CE or DCI, etc.), indicated by the UE (e.g., through an RRC message, UCI, etc.), or implicitly indicated by a model ID based on an predefined rule (e.g., a bit in the ID set to 0 is the default model, etc.).

### 2. Trigger of model adaptation

With the movement of the UE, the wireless communication environment may change significantly, which may affect an adaptation degree and performance of the CSI model. In such situation, it is necessary to trigger re-adaptation of the CSI model with the current scenario, and the trigger conditions may be divided into two situations: the UE trigger and the base station trigger.

### a. UE trigger

The UE may determine whether the currently used CSI model is still adaptable to the current wireless scenario by monitoring whether one or more metrics satisfy a threshold value. The specific monitoring metrics, the threshold values corresponding to the metrics, and the monitoring periods or times may be predefined by the protocol or configured by the base station to the UE. For example, the monitoring metrics, the threshold values and the monitoring periods or times may be configured by base station to the UE through the broadcast message, the RRC message, the MAC CE message, the DCI, or the like. Candidate examples of potential monitoring metrics are described as follows.
(1) UE trigger based on current data transmission performance: because performance of CSI acquisition will eventually be reflected in the data transmission performance of the communication system, thus, whether the performance of CSI acquisition needs to be optimized may be determined through the current data transmission condition. The metric reflecting the data communication performance may be a success rate of reception of the current data packet, such as the BLER, the BER, etc.
(2) UE trigger based on current position information: when the position of the UE changes greatly, the wireless scenario where the UE located is likely to be changed.
(3) UE trigger based on performance of a current CSI model: when the UE maintains a complete CSI model (including the encoder and the decoder), the UE may determine whether model scenario adaptation needs to be triggered by determining a similarity between an input of the encoder and an output of the decoder of the CSI feedback model. The metric for determining the performance of the CSI feedback model may include a similarity, a cosine similarity, a cosine similarity square, a mean square error, a normalized mean square error, or the like, between an input and an output of the model.
(4) UE trigger based on a channel quality condition of the current communication environment: the channel quality condition may indirectly reflect a distance between the base station and the UE, and whether there is obstruction in the communication link, etc. The metric reflecting the current channel quality condition may include the SNR, the SINR, the RSRP, the RSRQ, the RSSI, or the like.

When the UE determines that the scenario adaptation needs to be triggered, the UE may transmit a trigger message to the base station, the trigger message may be transmitted through, for example, the RRC message, the UCI, the PUSCH, or the like.

### b. Base station trigger

Similarly, the base station may also determine whether to trigger the CSI model adaptation by monitoring whether one or more metrics satisfy the threshold value. The specific detecting metrics and the threshold values corresponding to the metrics may be agreed in the protocol, implemented based on the base station, or reported by the UE to the base station, for example, through the RRC message, the UCI, the PUSCH, or the like. Candidate examples of potential monitoring metrics are described as follows.
(1) Base station trigger based on the current data transmission performance: because the performance of CSI acquisition will eventually be reflected in the data transmission performance of the communication system, thus, whether the performance of CSI acquisition needs to be optimized may be determined through the current data transmission condition. The base station may perform the monitoring through the data throughput rate or spectral efficiency of the current UE.
(2) Base station trigger based on the current position information: when the position of the UE changes greatly, the wireless scenario where the UE located is likely to be changed.
(3) Base station trigger based on the current HARQ state: a number of HARQ retransmissions and/or a frequency of HARQ retransmissions initiated by the UE reflect a success rate of data reception by the UE to a certain extent, therefore, the base station may determine whether to trigger the scenario adaptation by monitoring the number or frequency of HARQ retransmissions by the UE.
(4) Base station trigger based on the channel quality condition of the current communication environment: the channel quality condition may indirectly reflect a distance between the base station and the UE, and whether there is obstruction in the communication link, etc. The base station may monitor the current channel quality condition between the base station and the UE by monitoring the uplink reference signal transmitted by the UE, and the metric reflecting the current channel quality condition may include the SNR, the SINR, the RSRP, the RSRQ, the RSSI, or the like.

### 3. Model selection based on scenario recognition by base station

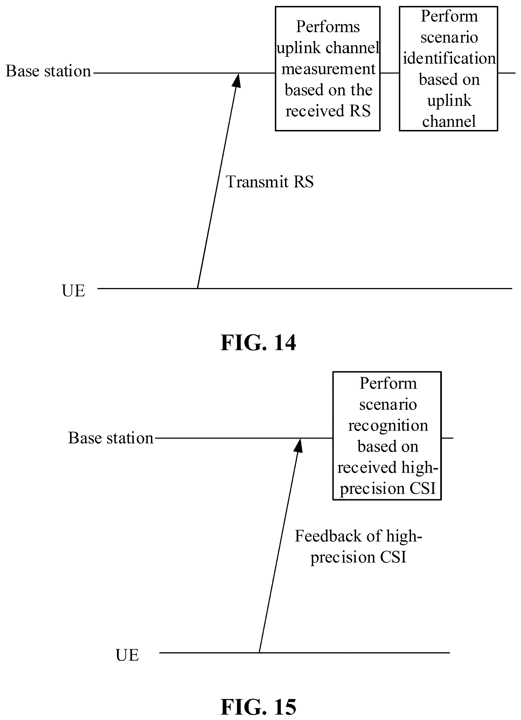

After the CSI model scenario adaptation is triggered, the base station needs to firstly determine the scenario to which the current wireless communication environment between the base station and the UE belongs, and then performs the model selection based on the determination result. There are several manners for the base station to perform the scenario recognition. Herein, only an identification basis for which potential air interface influence is present is described, and the specific identification methods operated in internal of the base station (such as using traditional algorithms, AI models, etc.) are not limited.
a. The base station performs the scenario recognition based on uplink channel information. In the FDD mode, there is no explicit reciprocity between the uplink and downlink channels, and the downlink CSI may not be directly estimated based on the uplink CSI, however, there is still a correlation between the uplink and downlink channels. According to a propagation theory of the wireless signal, a characteristic of the wireless channels is decided by the located wireless transmission environment, such as a distance between the base station and the UE, whether there is a LOS, distribution of surrounding buildings, etc. Essentially, the uplink and downlink wireless channels are specific reflections of a same wireless transmission environment on different frequency bands. Therefore, although the uplink channel information cannot be directly used to estimate the downlink CSI, the uplink channel information may be used for the scenario recognition to provide guidance for the downlink CSI feedback. Specifically, the base station may measure and acquire the uplink channel information based on an uplink RS previously transmitted by the UE, or may trigger the UE to transmit an uplink RS (for example, an SRS) to perform the scenario recognition. The UE may be triggered to transmit the RS used for the scenario recognition through, for example, the RRC message, the MAC CE message, the DCI, or the like. Since the conventional uplink RS may not satisfy the requirements of the scenario recognition well, the RS transmitted by the UE and triggered by the base station may be specifically configured or defined for the purpose of the scenario recognition, and the RS may, for example, have a higher density and occupy a wider frequency band. An example procedure is illustrated in FIG. 14, in which the base station requests the UE to transmit the RS for the scenario recognition. After the UE transmits the RS, the base station performs uplink channel measurement based on the received RS, and then performs the scenario identification based on uplink channel information.
b. The base station performs the scenario recognition based on UE position information. The wireless communication scenario is closely related to the position of the UE. The base station may perform the scenario recognition based on: a previous positioning result of the UE, or trigger of reporting new positioning information by the UE, or initiation positioning of the UE.
c. The base station performs the scenario recognition based on CSI information fed back by the UE. The CSI information fed back by the UE is essentially quantized downlink channel information. Although there may be some error between the CSI information fed back by the UE and ideal channel information, the CSI information may contain rich information. The base station may perform the scenario recognition based on the CSI result previously fed back by the UE, or may perform a new CSI feedback configuration for the UE for the scenario recognition (for example, the configuration may be triggered through the RRC message, the MAC CE, the DCI or the like). Since the conventional CSI feedback may not satisfy the requirements of the scenario recognition well, the CSI feedback transmitted by the UE and triggered by the base station may be specifically configured or defined for the purpose of the scenario recognition. For example, a larger feedback cost may be configured, feedback with a finer frequency-domain granularity may be configured, and so on. An example of the procedure is illustrated in FIG. 15, in which the base station configures the UE to use more bits for the CSI feedback. The UE feeds back CSI with a high-precision to the base station based on the configuration of the base station. The base station performs the scenario recognition based on the received high-precision CSI.

### 4. Model adaptation implementation

Since the CSI model needs to be applied to both the base station and the UE, when the base station completes the model selection, the base station needs to notify the UE of the selection result. Specifically, the base station needs to configure an ID corresponding to the selected model to the UE (for example, through the RRC message, the MAC CE, the DCI, etc.). After the UE successfully receives the configured ID, the UE needs to inform the base station of feedback (for example, through RRC message, UCI, PUSCH, etc.). After the above operations are completed, the base station and the UE may switch to the new CSI model, and the adaptation process is completed.

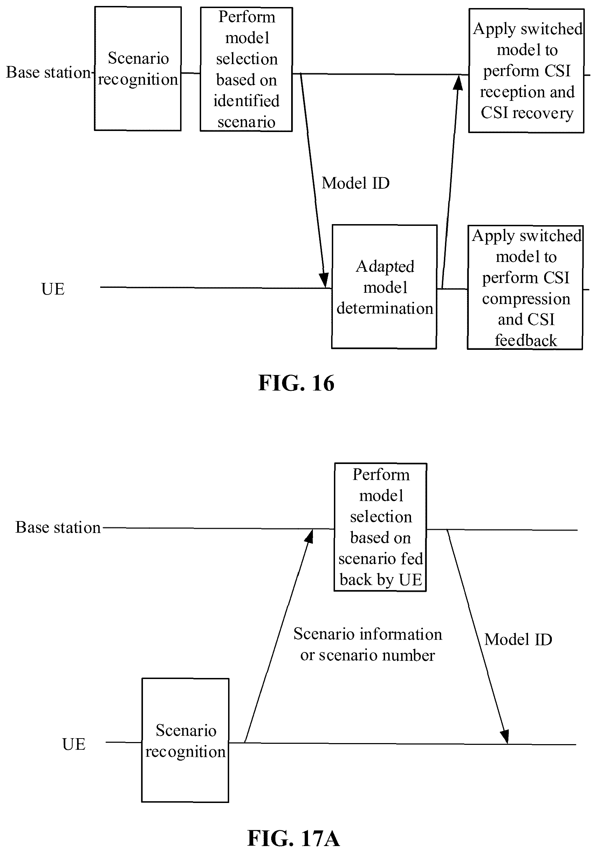

An example of the model adaptation process is illustrated in FIG. 16. The base station, after performing the scenario recognition, the base station performs the model selection based on the identified scenario. The base station transmits the ID of the selected model to the UE. After receiving the model ID from the base station, the UE determines the adapted model. For example, if the base station transmits the decoder ID of the CSI feedback model to the UE, the UE may determine the encoder ID of the UE based on the decoder ID. The UE feeds back its own model ID to the base station. The base station applies the switched model to perform CSI reception, CSI recovery and other operations. The UE applies the switched model to perform CSI compression, CSI feedback and other operations.

### Example 2: The UE serves as a decision-making entity to implement the CSI acquisition scheme such as CSI model adaptation.

In this example, multiple sets of CSI models adaptable for different wireless communication scenarios may be configured in both the base station and the UE, and the UE may serve as the decision-making entity to implement the wireless scenario recognition, to select the most suitable model to adapt to a current scenario. In an embodiment of the present disclosure, the CSI model may be referred to as a CSI feedback model, a CSI feedback AI model, or the like.

The overall process of the example includes: multi-scenario model acquisition and necessary information interaction, trigger of model adaptation, model selection based on scenario recognition with the UE as the decision-making entity, and model adaptation implementation, and so on.

### 1. Multi-scenario model acquisition and necessary information interaction

Because the AI-based CSI feedback scheme requires the base station and the UE to both maintain a matched encoder model and/or decoder model (as illustrated in FIG 3), multiple sets of models adaptable to different scenarios actually correspond to multiple sets of encoder and decoder models. In an embodiment of the present disclosure, there is no specific limitation on definition or division mode for the scenarios, and the degree of detail thereof depends on the specific implementations. For example, the potential scenario may include: an LOS scenario, an NLOS scenario, a city street, countryside, an indoor, and the like.

In order to achieve the CSI model adaptation, firstly, both the UE and the base station need to maintain matched encoder and decoder models corresponding to multiple sets of scenarios. Different models may correspond to respective identification information (such as model ID), to facilitate indication when switching models. There are several manners for obtaining the model and the ID corresponding to the model.
a. Base station providing: the base station itself maintains multiple sets of models, and the base station configures the models and IDs corresponding to the models to the UE. For example, the models and the IDs may be configured by base station to the UE through an RRC message, a broadcast configuration, an MAC CE, DCI, or the like. The models configured by the base station to the UE may include only an encoder portion, or may include an encoder and a decoder.
b. Manufacturer predefinition: manufacturers of the base station and UE have predefined several matched models. In such situation, the UE needs to report the maintained model information and corresponding IDs to the base station (for example, reported by the UE to the base station through an RRC message, UCI, etc.) to realize alignment of model information between the base station and the UE.
c. Acquisition through a third party or an agreement

When multiple sets of models are maintained, the base station and the UE need to have a consensus on which set of models to be used by default. The default model may be indicated by the base station (e.g., through the RRC message, the broadcast configuration, the MAC CE or the DCI, etc.), indicated by the UE (e.g., through the RRC message, the UCI, etc.), or implicitly indicated by the model ID based on an predefined rule (e.g., a bit in the ID set to 0 is the default model, etc.).

### 2. Trigger of model adaptation

With the movement of the UE, the wireless communication environment may change significantly, which may affect an adaptation degree and performance of the CSI model. In such situation, it is necessary to trigger re-adaptation of the CSI model with the current scenario, and the trigger conditions may be divided into two situations: UE trigger and base station trigger.

### a. UE trigger

The UE may determine whether the currently used CSI model is still adaptable to the current wireless scenario by monitoring whether one or more metrics satisfy a threshold value. The specific monitoring metrics, the threshold values corresponding to the metrics, and the monitoring periods or times may be predefined by the protocol or configured by the base station to the UE. For example, the monitoring metrics, the threshold values and the monitoring periods or times may be configured by the base station to the UE through a broadcast message, an RRC message, an MAC CE message, DCI, or the like. Candidate examples of potential monitoring metrics are described as follows.
(1) The UE determines whether to trigger the CSI model adaptation based on current data transmission performance. Because the performance of the CSI acquisition will eventually be reflected in data transmission performance of the communication system, thus, whether the performance of CSI acquisition needs to be optimized may be determined through the current data transmission condition. The metric reflecting the data communication performance may be a success rate of reception of the current data packet, such as the BLER, the BER, etc.
(2) The UE determines whether to trigger the CSI model adaptation based on current position information. When the position of the UE changes greatly, the wireless scenario where the UE located is likely to be changed.
(3) The UE determines whether to trigger the CSI model adaptation based on performance of a current CSI model. When the UE maintains a complete CSI model (including an encoder and a decoder), the UE may determine whether a model scenario adaptation needs to be triggered by determining a similarity between an input of the encoder and an output of the decoder of the CSI feedback model. The metric for determining the performance of the CSI feedback model may include a similarity, a cosine similarity, a cosine similarity square, a mean square error, a normalized mean square error, and the like, between an input and an output of the model.
(4) The UE determines whether to trigger the CSI model adaptation based on a channel quality condition of the current communication environment. The channel quality condition may indirectly reflect a distance between the base station and the UE, and whether there is obstruction in the communication link, etc. The metric reflecting the current channel quality condition may include the SNR, the SINR, the RSRP, the RSRQ, the RSSI, and the like.

When the UE determines that the scenario adaptation needs to be triggered, the UE may transmit a trigger message to the base station, the trigger message may be transmitted through, for example, the RRC message, the UCI, the PUSCH, or the like.

### b. Base station trigger

Similarly, the base station may also determine whether to trigger the CSI model adaptation by monitoring whether one or more metrics satisfy a threshold value. The specific detecting metrics and the threshold values corresponding to the metrics may be agreed in the protocol, implemented based on the base station, or reported by the UE to the base station, for example, through the RRC message, the UCI, the PUSCH, or the like. Candidate examples of potential monitoring metrics are summarized as follows.
(1) The base station determines whether to trigger the CSI model adaptation based on the current data transmission performance. Because the performance of CSI acquisition will eventually be reflected in the data transmission performance of the communication system, thus, whether the performance of CSI acquisition needs to be optimized may be determined through the current data transmission condition. The base station may perform the monitoring through the data throughput rate or the spectral efficiency of the current UE.
(2) The base station determines whether to trigger the CSI model adaptation based on the current position information. When the position of the UE changes greatly, the wireless scenario where the UE located is likely to be changed.
(3) The base station determines whether to trigger the CSI model adaptation based on the current HARQ state. A number of HARQ retransmissions and/or a frequency of HARQ retransmissions initiated by the UE reflect a success rate of data reception by the UE to a certain extent. Therefore, the base station may determine whether to trigger the scenario adaptation by monitoring the number or frequency of HARQ retransmissions by the UE.
(4) The base station determines whether to trigger the CSI model adaptation based on the channel quality condition of the current communication environment. The channel quality condition may indirectly reflect a distance between the base station and the UE, and whether there is obstruction in the communication link, etc. The base station may monitor the current channel quality condition between the base station and the UE by monitoring the uplink reference signal transmitted by the UE, and the metric reflecting the current channel quality condition may include the SNR, the SINR, the RSRP, the RSRQ, the RSSI, or the like.

### 3. Model selection based on scenario recognition by UE

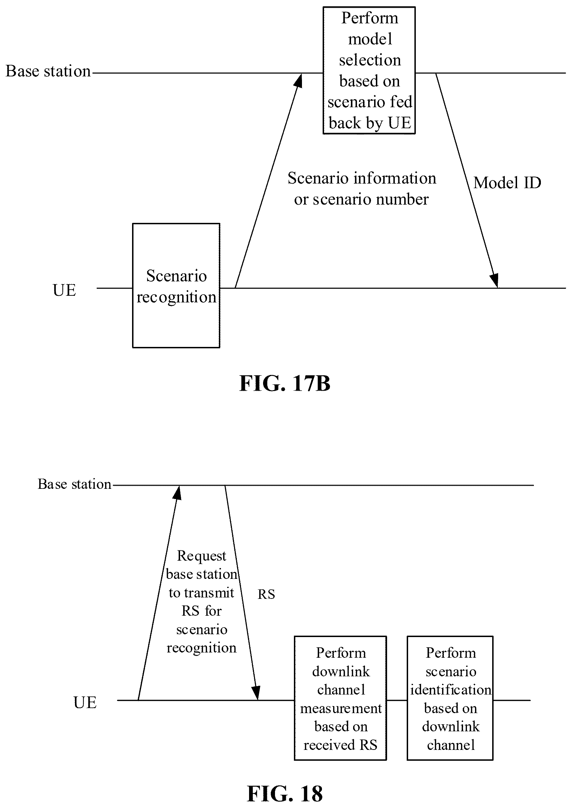

After the CSI model scenario adaptation is triggered, the UE needs to firstly determine the scenario to which the current wireless communication environment between the base station and the UE belongs. Then, the UE may report the determination result, for example, scenario information or a scenario number, for the base station to perform the model selection based on the scenario fed back by the UE. Then, the base station transmits the selection result, for example, a model ID, to the UE, as illustrated in FIG. 17A. Alternatively, the UE itself may perform the model selection according to the determination result of the scenario recognition and report the selection result such as the model ID, as illustrated in FIG. 17B.

There are several manners for the UE to perform the scenario recognition. Herein, only the identification basis for which potential air interface influence is present is described, and the specific identification methods operated in internal of the UE (such as using traditional algorithms, AI models, etc.) are not limited.
a. The UE performs the scenario recognition based on UE position information. The wireless communication scenario is closely related to the position of the UE. The UE may perform the scenario recognition based on its own position information. The operation that the UE performs the recognition based on the position information can better protect privacy information.
b. The UE performs the scenario recognition based on a downlink channel measurement result. The wireless environment (such as a building density, and whether there is an LOS) may directly affect the transmission of electromagnetic signals and may be reflected in the wireless channel characteristics. Therefore, the UE may perform the scenario recognition based on the measured downlink channel information. The UE may perform the channel measurement by directly using the current downlink RS. On the other hand, since the conventional downlink RS may not satisfy the requirements of the scenario recognition well, the UE may also trigger the base station to transmit the RS which is specifically configured or defined for the purpose of the scenario recognition, and the RS may, for example, have a higher density and occupy a wider frequency band. The UE may trigger the base station to transmit the RS which is used for the scenario recognition through, for example, the RRC message, the UCI, or the like. An example procedure is illustrated in FIG. 18, in which the UE requests the base station to transmit an RS for the scenario recognition. After the UE receives the RS from the base station, the UE performs downlink channel measurement based on the received RS, and then the UE performs the scenario identification based on downlink channel information.
c. The UE performs the scenario recognition based on performance of different CSI models. When the UE maintains multiple sets of complete CSI models (including the encoder and decoder models) locally, the UE may locally run and test the performance effects of the different CSI models, and make a selection based on results. Specifically, the UE may input a current CSI to be fed back into different models, and determine which model is most adaptable to the current scenario by determining a similarity between the input of the encoder and the output of the decoder output for different models. The metric for determining the performance of the CSI feedback model may include a similarity, a cosine similarity, a cosine similarity square, a mean square error, a normalized mean square error, and the like, between an input and an output of the model.

### 4. Model adaptation implementation

Since the CSI model needs to be applied to both the base station and the UE, when the UE or the base station completes the model selection, the UE or the base station needs to notify the counterpart of the selection result.

Specifically, for the situation that the base station completes the model selection, the base station needs to configure an ID corresponding to the selected model to the UE (for example, through the RRC message, the MAC CE, the DCI, or the like). After the UE successfully receives the configured ID, the UE needs to inform the base station of feedback (for example, through the RRC message, the UCI, the PUSCH, or the like).

For the situation that the UE completes the model selection, the UE also needs to transmit the ID corresponding to the selected model to the base station (for example, through the RRC message, the UCI, the PUSCH, or the like). After the base station successfully receives the configured ID, the base station needs to inform the UE of feedback (for example, through the RRC message, the UCI, the PUSCH, or the like). After the above operations are completed, the base station and the UE may switch to the new CSI model, and the adaptation process is completed.

By introducing the scenario recognition mechanism in the wireless communication system, the solution of the embodiment of the present disclosure can realize adaptation between the CSI feedback model and the wireless scenario in which the UE is located, therefore, the better CSI feedback performance can be achieved. Specifically, under certain complexity constraints, the AI model generally has a better performance in familiar scenarios (that is, a scenario where the AI model was subjected to during the training phase or a scenario similar to this scenario), but the performance of the AI model for familiar scenarios cannot be ensured. The flow introduced in the solution enables the base station and the UE to dynamically select and switch to an appropriate model according to the actual wireless communication scenario where the base station and the UE are located, thereby improving the overall performance.

In the above examples, it is mainly described that, the adaptation between the communication scenario and the CSI feedback scheme is achieved by switching the AI model based on the scenario recognition result. In specific applications, the AI model based CSI feedback scheme is merely an example. In fact, the switching between traditional feedback schemes based on the scenario recognition result may also be considered. For example, the switching objects are not AI models, but different codebook types, such as a Type I codebook, a Type II codebook, etc., or the switching may be performed between the AI scheme and the traditional codebook scheme.

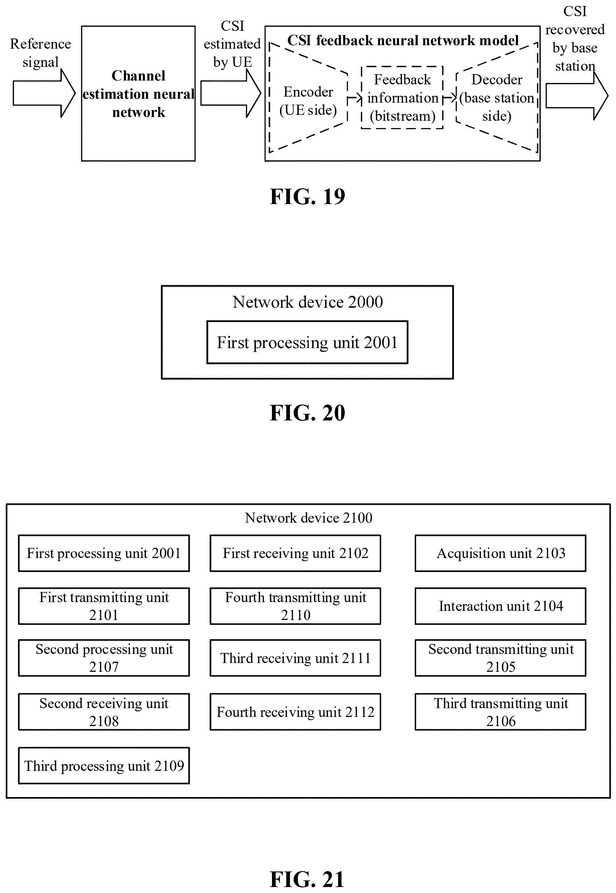

The CSI model in the above examples may also be replaced with other models. For example, before the CSI is compressed and fed back, the UE needs to perform the channel estimation based on the received RS in advance to obtain the CSI. As illustrated in FIG. 19, the channel estimation process may also be implemented by an AI model, there is also a problem of adaptation between the AI model and the communication scenario. For example, a reference signal is input to a channel estimation model, such as a channel estimation neural network model, to obtain the CSI estimated by the UE. Then, the CSI estimated by the UE is input to an encoder (at UE side) of the CSI model, such as the CSI feedback neural network model, to obtain the feedback information, and the feedback information is transmitted to the base station. The CSI recovered by the base station is obtained after processing the feedback information by the decoder at the base station. The adaptation process of the channel estimation model may refer to the adaptation process of the CSI model. The model adaptation process in the embodiment of the present disclosure may be extended to include a channel estimation AI model or other non-AI channel estimation methods.

FIG. 20 is a schematic block diagram of a network device 2000 according to an embodiment of the present disclosure. The network device 2000 may include a first processing unit 2001.

The first processing unit 2001 is configured to determine a CSI acquisition scheme corresponding to communication scenario information, the communication scenario information including a scenario to which a wireless communication environment between the network device and a terminal device belongs.

In some implementations, the CSI acquisition scheme includes: an AI model for CSI acquisition and/or a non-AI feedback scheme for CSI acquisition. The AI model for CSI acquisition includes at least one of:
a CSI feedback model; or
a channel estimation model.

In an implementation, the first processing unit 2001 is further configured to select the CSI acquisition scheme based on the communication scenario information.

In an implementation, on the basis of the network device in the above embodiments, as illustrated in FIG. 21, the network device 2100 may further include a first transmitting unit 2101.

The first transmitting unit 2101 is configured to transmit information related to the CSI acquisition scheme selected by the first processing unit.

In an implementation, the information related to the CSI acquisition scheme is carried by at least one of:
an RRC message, an MAC CE, or DCI.

In an implementation, as illustrated in FIG. 21, the network device 2100 further includes a first receiving unit 2102.

The first receiving unit 2102 is configured to receive information related to the CSI acquisition scheme, and
the first processing unit is further configured to determine the CSI acquisition scheme based on the information related to the CSI acquisition scheme.

In an implementation, the information related to the CSI acquisition scheme is carried by at least one of:
an RRC message, UCI or a PUSCH.

In an implementation, the information related to the CSI acquisition scheme is for indicating at least one of:
an ID of a CSI feedback model;
an ID of an encoder of a CSI feedback model;
an ID of a decoder of a CSI feedback model; or
an ID of a channel estimation model.

In an implementation, as illustrated in FIG. 21, the network device 2100 further includes an acquisition unit 2103.

The acquisition unit 2103 is configured to acquire at least one of: an encoder of a CSI feedback model, a decoder of a CSI feedback model, or a channel estimation model that is allowed to be used. The CSI feedback model and/or the channel estimation model have/has corresponding communication scenario information.

In an implementation, the CSI feedback model and/or the channel estimation model are provided by the terminal device, predefined by a manufacturer, or provided by a third-party device.

In an implementation, as illustrated in FIG. 21, the network device 2100 further includes an interaction unit 2104.

The interaction unit 2104 is configured to: interact, with the terminal device, basic information of the CSI feedback model and/or the channel estimation model, the basic information of the CSI feedback model and/or the channel estimation model including at least one of: an ID of the CSI feedback model, an ID of the encoder and an ID of the decoder, or an ID of the channel estimation model. The interaction unit may include a receiving unit and/or a transmitting unit. The transmitting unit may transmit the basic information of the CSI feedback model and/or the channel estimation model currently applicable to the network device to the terminal device. The receiving unit may receive the basic information of the CSI feedback model and/or the channel estimation model currently applicable to the terminal device.

In an implementation, the basic information of the CSI feedback model and/or the channel estimation model is configured by at least one of:
an RRC message;
a broadcast message;
an MAC CE;
DCI; or
UCI.

In an implementation, the first processing unit is further configured to trigger re-adaptation of the CSI acquisition scheme based on a first monitoring metric.

In an implementation, as illustrated in FIG. 21, the network device 2100 further includes a second transmitting unit 2105.

The second transmitting unit 2105 is configured to transmit trigger information based on the first monitoring metric, the trigger information being used for triggering re-adaptation of the CSI acquisition scheme by the terminal device.

In an implementation, the first monitoring metric includes at least one of:
data transmission performance;
position information of the terminal device;
an HARQ state; or
a channel quality condition.

In an implementation, the data transmission performance includes a spectral efficiency and/or a data throughput rate of the terminal device.

In an implementation, the HARQ state includes a number of HARQ retransmissions and/or a frequency of HARQ retransmissions of the terminal device.

In an implementation, the channel quality condition includes at least one of: an SNR, an SINR, an RSRP, an RSRQ, or an RSSI.

In an implementation, the first processing unit is further configured to: perform, based on a second monitoring metric, scenario recognition on the wireless communication environment between the network device and the terminal device, to obtain the communication scenario information.

In an implementation, as illustrated in FIG. 21, the network device 2100 further includes a third transmitting unit 2106.

The third transmitting unit 2106 is configured to transmit the communication scenario information.

In an implementation, the second monitoring metric includes at least one of:
uplink channel information;
position information of the terminal device; or
CSI fed back by the terminal device.

In an implementation, as illustrated in FIG. 21, the network device 2100 further includes a second processing unit 2107, a second receiving unit 2108, and a third processing unit 2109.

The second processing unit 2107 is configured to request the terminal device to transmit a reference signal for the scenario recognition.

The second receiving unit 2108 is configured to receive the reference signal.

The third processing unit 2109 is configured to: perform uplink channel measurement based on the reference signal to obtain an uplink channel measurement result, the uplink channel measurement result being used for performing the scenario recognition by the network device.

In an implementation, as illustrated in FIG. 21, the network device 2100 further includes a fourth transmitting unit 2110 and a third receiving unit 2111.

The fourth transmitting unit 2110 is configured to transmit a CSI feedback configuration for the scenario recognition to the terminal device.

The third receiving unit 2111 is configured to receive CSI fed back by the terminal device based on the CSI feedback configuration, the CSI being used for performing the scenario recognition by the network device.

In an implementation, as illustrated in FIG. 21, the network device 2100 further includes a fourth receiving unit 2112.

The fourth receiving unit 2112 is configured to receive the communication scenario information.

The network devices 2000 and 2100 according to the embodiments of the present disclosure may realize the functions corresponding to the network device in the above-described method embodiments. Flows, functions, implementations, and beneficial effects corresponding to various modules (sub-modules, units, components, etc.) in the network devices 2000 and 2100 may refer to the description corresponding to the above-described method embodiments, which will not be elaborated herein again. The functions described with respect to various modules (sub-modules, units, components, etc.) in the network devices 2000 and 2100 of the embodiments of the present disclosure may be implemented by different modules (sub-modules, units, components, etc.), or may be implemented by a same module (sub-module, unit, component, etc.).

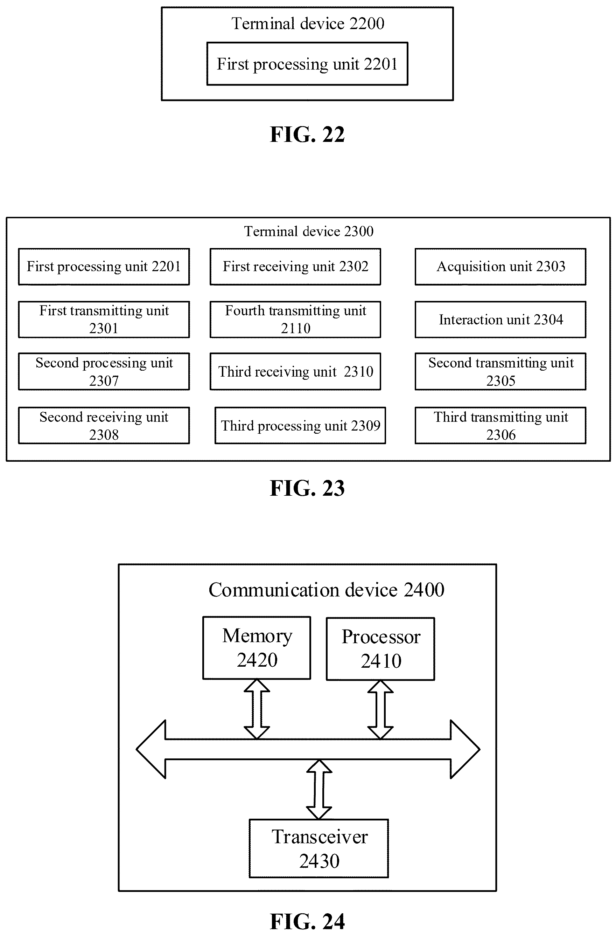

FIG. 22 is a schematic block diagram of a terminal device 2200 according to an embodiment of the present disclosure. The terminal device 2200 may include a first processing unit 2201.

The first processing unit 2201 is configured to determine a CSI acquisition scheme corresponding to communication scenario information, the communication scenario information including a scenario to which a wireless communication environment between the terminal device and a network device belongs.

In some implementations, the CSI acquisition scheme includes: an AI model for CSI acquisition and/or a non-AI feedback scheme for CSI acquisition. The AI model for CSI acquisition includes at least one of:
a CSI feedback model; or
a channel estimation model.

In an implementation, the first processing unit 2201 is further configured to select the CSI acquisition scheme based on the communication scenario information.

In an implementation, as illustrated in FIG. 23, the terminal device 2300 further includes a first transmitting unit 2301.

The first transmitting unit 2301 is configured to transmit information related to the CSI acquisition scheme selected by the first processing unit.

In an implementation, the information related to the CSI acquisition scheme is carried by at least one of:
an RRC message, UCI or a PUSCH.

In an implementation, as illustrated in FIG. 23, the terminal device 2300 further includes a first receiving unit 2302.

The first receiving unit 2302 is configured to receive information related to the CSI acquisition scheme.

The first processing unit 2303 is further configured to determine the CSI acquisition scheme based on the information related to the CSI acquisition scheme.

In an implementation, the information related to the CSI acquisition scheme is carried by at least one of:
an RRC message, an MAC CE, or DCI.

In an implementation, the information related to the CSI acquisition scheme is for indicating at least one of:
an ID of a CSI feedback model;
an ID of an encoder of a CSI feedback model;
an ID of a decoder of a CSI feedback model; or
an ID of a channel estimation model.

In an implementation, as illustrated in FIG. 23, the terminal device 2300 further includes an acquisition unit 2303.

The acquisition unit 2303 is configured to acquire at least one of: an encoder of a CSI feedback model, a decoder of a CSI feedback model, or a channel estimation model that is allowed to be used. The CSI feedback model and/or the channel estimation model have/has corresponding communication scenario information.

In an implementation, the CSI feedback model and/or the channel estimation model are provided by the network device, predefined by a manufacturer, or provided by a third-party device.

In an implementation, as illustrated in FIG. 23, the terminal device 2300 further includes an interaction unit 2304.

The interaction unit 2304 is configured to: interact, with the network device, basic information of the CSI feedback model and/or the channel estimation model, the basic information of the CSI feedback model and/or the channel estimation model including at least one of: an ID of the CSI feedback model, an ID of the encoder and an ID of the decoder, or an ID of the channel estimation model. The interaction unit may include a receiving unit and/or a transmitting unit. The transmitting unit may transmit the basic information of the CSI feedback model and/or the channel estimation model currently applicable to the terminal device to the network device. The receiving unit may receive the basic information of the CSI feedback model and/or the channel estimation model currently applicable to the network device.

In an implementation, the basic information of the CSI feedback model and/or the channel estimation model is configured by at least one of:
an RRC message;
a broadcast message;
an MAC CE;
DCI; or
UCI.

In an implementation, as illustrated in FIG. 23, the first processing unit is further configured to trigger re-adaptation of the CSI acquisition scheme based on a third monitoring metric.

In an implementation, as illustrated in FIG. 23, the terminal device 2300 further includes a second transmitting unit 2305.

The second transmitting unit 2305 is configured to transmit trigger information based on the third monitoring metric, the trigger information being used for triggering re-adaptation of the CSI acquisition scheme by the network device.

In an implementation, the third monitoring metric includes at least one of:
data transmission performance;
position information of the terminal device;
CSI model performance of the terminal device;
an HARQ state; or
a channel quality condition.

In an implementation, the data transmission performance includes at least one of: a data throughput rate, a spectral efficiency, a BLER, or a BER of the terminal device.

In an implementation, the HARQ state includes a number of HARQ retransmissions and/or a frequency of HARQ retransmissions of the terminal device.

In an implementation, the channel quality condition includes at least one of: an SNR, an SINR, an RSRP, an RSRQ, or an RSSI.

In an implementation, the first processing unit is further configured to: perform, based on a fourth monitoring metric, scenario recognition on the wireless communication environment between the terminal device and the network device, to obtain the communication scenario information.

In an implementation, as illustrated in FIG. 23, the terminal device 2300 further includes a third transmitting unit 2306.

The third transmitting unit 2306 is configured to transmit the communicationscenario information.

In an implementation, the fourth monitoring metric includes at least one of:
downlink channel information;
position information of the terminal device; or
CSI model performance of the terminal device.

In an implementation, as illustrated in FIG. 23, the terminal device 2300 further includes a second processing unit 2307.

The second processing unit 2307 is configured to request the network device to transmit a reference signal for the scenario recognition.

The second receiving unit 2308 is configured to receive the reference signal.

The third processing unit 2309 is configured to: perform downlink channel measurement based on the reference signal to obtain a downlink channel measurement result, the downlink channel measurement result being used for performing the scenario recognition by the terminal device.

In an implementation, as illustrated in FIG. 23, the terminal device 2300 further includes a third receiving unit 2310.

The third receiving unit 2310 is configured to receive the communication scenario information.

The terminal devices 2200 and 2300 according to the embodiments of the present disclosure may realize the functions corresponding to the terminal device in the above-described method embodiments. Flows, functions, implementations, and beneficial effects corresponding to various modules (sub-modules, units, components, etc.) in the terminal devices 2200 and 2300 may refer to the description corresponding to the above-described method embodiments, which will not be elaborated herein again. The functions described with respect to various modules (sub-modules, units, components, etc.) in the terminal devices 2200 and 2300 of the embodiments of the present disclosure may be implemented by different modules (sub-modules, units, components, etc.), or may be implemented by a same module (sub-module, unit, component, etc.).

FIG. 24 is a schematic structural diagram of a communication device 2400 according to an embodiment of the present disclosure. The communication device 2400 includes a processor 2410. The processor 2410 may be configured to call a computer program stored in a memory and run the computer program, to cause the communication device 2400 to perform the method in the embodiments of the present disclosure.

In an implementation, the communication device 2400 may further include a memory 2420. The processor 2410 may be configured to call the computer program stored in the memory 2420 and run the computer program, to cause the communication device 2400 to perform the method according to the embodiments of the present disclosure.

The memory 2420 may be a separate device independent from the processor 2410, or may be integrated into the processor 2410.

In an implementation, the communication device 2400 may further include a transceiver 2430. The processor 2410 may control the transceiver 2430 to communicate with other devices, specifically, to transmit information or data to other devices, or receive information or data from other devices.

The transceiver 2430 may include a transmitter and a receiver. The transceiver 2430 may further include an antenna, and there may be one or more antennas.

In an implementation, the communication device 2400 may be a network device in the embodiments of the present disclosure. The communication device 2400 may perform corresponding flows that are implemented by the network device in various methods of the embodiments of the present disclosure. For brevity, details are not elaborated herein again.

In an implementation, the communication device 2400 may be a terminal device in the embodiments of the present disclosure. The communication device 2400 may perform corresponding flows that are implemented by the terminal device in various methods of the embodiments of the disclosure. For brevity, details are not elaborated herein again.

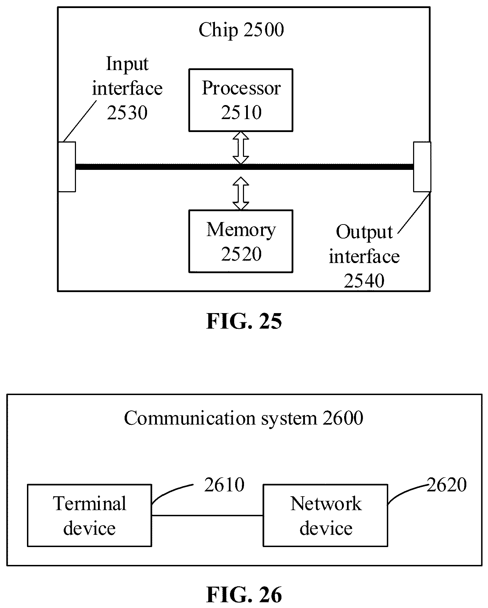

FIG. 25 is a schematic structural diagram of a chip 2500 according to an embodiment of the present disclosure. The chip 2500 includes a processor 2510. The processor 2510 may be configured to call a computer program stored in a memory and run the computer program to perform the method in the embodiments of the present disclosure.

In an implementation, the chip 2500 may further include a memory 2520. The processor 2510 may be configured to call the computer program stored in the memory 2520 and run the computer program, to perform the method performed by the terminal device or the network device in the embodiments of the present disclosure.

The memory 2520 may be a separate device independent from the processor 2510, or may be integrated into the processor 2510.

In an implementation, the chip 2500 may further include an input interface 2530. The processor 2510 may control the input interface 2530 to communicate with other devices or chips, specifically, to obtain information or data from other devices or chips.

In an implementation, the chip 2500 may further include an output interface 2540. The processor 2510 may control the output interface 2540 to communicate with other devices or chips, specifically, to output information or data to other devices or chips.

In an implementation, the chip may be applied to the network device in embodiments of the present disclosure. The chip may perform corresponding flows that are performed by the network device in various methods in the embodiments of the present disclosure. For brevity, details are not elaborated herein again.

In an implementation, the chip may be applied to the terminal device in embodiments of the present disclosure. The chip may perform corresponding flows that are performed by the terminal device in various methods in the embodiments of the present disclosure. For brevity, details are not elaborated herein again.

The chips applied to the network device and the terminal device may be the same chip or different chips.

It should be understood that, the chip mentioned in the embodiments of the present disclosure may also be referred to as a system-level chip, a system chip, a chip system or a chip of a system on chip, etc.

The foregoing processor may be a general-purpose processor, a digital signal processor (DSP), a field programmable gate array (FPGA), an application specific integrated circuit (ASIC), or another programmable logical device, transistor logical device, or discrete hardware component. The general-purpose processor mentioned above may be a microprocessor or any conventional processor and the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM) or a flash memory. The volatile memory may be a random access memory (RAM).

It should be understood that, the foregoing memory is exemplary but not for limitation. For example, the memory in the embodiments of the present disclosure may be a static RAM (SRAM), a dynamic RAM (DRAM), a synchronous DRAM (SDRAM), a double data rate SDRAM (DDR SDRAM), an enhanced SDRAM (ESDRAM), an synch link DRAM (SLDRAM) and a direct rambus RAM (DR RAM), etc. It should be noted that, the memory in the embodiments of the present disclosure aims to include but not be limited to these memories and any other suitable types of memories.

FIG. 26 is a schematic block diagram of a communication system 2600 according to an embodiment of the present disclosure. The communication system 2600 includes a terminal device 2610 and a network device 2620.

The terminal device 2610 may be configured to implement corresponding functions that are implemented by the terminal device in the above methods. The network device 2620 may be configured to implement corresponding functions that are implemented by the network device in the above methods. For the sake of brevity, details will not be elaborated herein again.

The above embodiments may be implemented in whole or in part by software, hardware, firmware or any combination thereof. When implemented in the form of software, the embodiments may be implemented in whole or in part in the form of a computer program product. The computer program product includes one or more computer instructions. When the computer program instructions are loaded and executed on a computer, all or part of the processes or functions described in accordance with embodiments of the present disclosure are generated. The computer may be a general-purpose computer, a special-purpose computer, a computer network, or other programmable devices. The computer instructions may be stored in a computer-readable storage medium or transmitted from a computer-readable storage medium to another computer-readable storage medium. For example, the computer instructions may be transmitted from a Web site, a computer, a server, or a data center to another Web site, computer, server, or data center through a wired (e.g. a coaxial cable, an optical fiber, a digital subscriber line (DSL)) or wireless (e.g. infrared, wireless, microwave, etc.) form. The computer-readable storage medium may be any available medium accessible to a computer or a data storage device such as a server, a data center, or the like that integrated with one or more available mediums. The available medium may be a magnetic medium (e.g. a floppy disk, a hard disk, a magnetic tape), an optical medium (e.g. a digital versatile disc (DVD)), or a semiconductor medium (e.g. a solid state disk (SSD)), etc.

It should be understood that in various embodiments of the present disclosure, the size of the sequence number of the above-mentioned processes does not mean the execution order, and the execution order of various processes are determined by their function and inherent logics, and should not be limited in any way to the implementation process of the embodiments of the present disclosure.

It may be clearly understood by those skilled in the art that, for the purpose of convenient and brief description, the detailed working process of the foregoing systems, apparatuses, and units may refer to the corresponding processes in the foregoing method embodiments, and details are not elaborated herein again.

The foregoing descriptions are merely specific implementations of the present disclosure, but are not intended to limit the scope of protection of the present disclosure. Any variation or replacement readily figured out by a person skilled in the art within the technical scope disclosed in the present disclosure shall fall within the scope of protection of the present disclosure. Therefore, the scope of protection of the present disclosure shall be subject to the scope of protection of the claims.

## Claims

1. A method for determining a channel-state information (CSI) acquisition scheme, comprising:
determining, by a network device, the CSI acquisition scheme corresponding to communication scenario information, the communication scenario information comprising a scenario to which a wireless communication environment between the network device and a terminal device belongs.

2. The method of claim 1, wherein the CSI acquisition scheme comprises an artificial intelligence (AI) model for CSI acquisition and/or a non-AI feedback scheme for CSI acquisition, wherein the AI model for CSI acquisition comprises at least one of:
a CSI feedback model; or
a channel estimation model.

3. The method of claim 1 or 2, wherein determining, by the network device, the CSI acquisition scheme corresponding to the communication scenario information comprises:
selecting, by the network device, the CSI acquisition scheme based on the communication scenario information.

4. The method of claim 3, further comprising:
transmitting, by the network device, information related to the CSI acquisition scheme selected by the network device.

5. The method of claim 4, wherein the information related to the CSI acquisition scheme is carried by at least one of:
a radio resource control (RRC) message, a media access control (MAC) control unit (CE), or downlink control information (DCI).

6. The method of claim 1 or 2, wherein determining, by the network device, the CSI acquisition scheme corresponding to the communication scenario information comprises:
receiving, by the network device, information related to the CSI acquisition scheme; and
determining, by the network device, the CSI acquisition scheme based on the information related to the CSI acquisition scheme.

7. The method of claim 6, wherein the information related to the CSI acquisition scheme is carried by at least one of:
an RRC message, uplink control information (UCI) or a physical uplink shared channel (PUSCH).

8. The method of any one of claims 4 to 7, wherein the information related to the CSI acquisition scheme is for indicating at least one of:
an identity (ID) of a CSI feedback model;
an ID of an encoder of a CSI feedback model;
an ID of a decoder of a CSI feedback model; or
an ID of a channel estimation model.

9. The method of any one of claims 1 to 8, further comprising:
acquiring, by the network device, at least one of: an encoder of a CSI feedback model, a decoder of a CSI feedback model, or a channel estimation model that is allowed to be used, wherein the CSI feedback model and/or the channel estimation model have/has corresponding communication scenario information.

10. The method of claim 9, wherein the CSI feedback model and/or the channel estimation model are provided by the terminal device, predefined by a manufacturer, or provided by a third-party device.

11. The method of claim 9 or 10, further comprising:
interacting, by the network device with the terminal device, basic information of the CSI feedback model and/or the channel estimation model, the basic information of the CSI feedback model and/or the channel estimation model comprising at least one of: an ID of the CSI feedback model, an ID of the encoder and an ID of the decoder, or an ID of the channel estimation model.

12. The method of claim 11, wherein the basic information of the CSI feedback model and/or the channel estimation model is configured by at least one of:
an RRC message;
a broadcast message;
an MAC CE;
DCI; or
UCI.

13. The method of any one of claims 1 to 12, further comprising:
triggering, by the network device, re-adaptation of the CSI acquisition scheme based on a first monitoring metric.

14. The method of any one of claims 1 to 12, further comprising:
transmitting, by the network device, trigger information based on the first monitoring metric, the trigger information being used for triggering re-adaptation of the CSI acquisition scheme by the terminal device.

15. The method of claim 13 or 14, wherein the first monitoring metric comprises at least one of:
data transmission performance;
position information of the terminal device;
a hybrid automatic repeat-request (HARQ) state; or
a channel quality condition.

16. The method of claim 15, wherein the data transmission performance comprises a spectral efficiency and/or a data throughput rate of the terminal device.

17. The method of claim 15 or 16, wherein the HARQ state comprises a number of HARQ retransmissions and/or a frequency of HARQ retransmissions of the terminal device.

18. The method of any one of claims 15 to 17, wherein the channel quality condition comprises at least one of: a signal to noise ratio (SNR), a signal interference noise ratio (SINR), a reference signal receiving power (RSRP), a reference signal received quality (RSRQ), or a received signal strength indication (RSSI).

19. The method of any one of claims 1 to 18, further comprising:
performing, by the network device based on a second monitoring metric, scenario recognition on the wireless communication environment between the network device and the terminal device, to obtain the communication scenario information.

20. The method of claim 19, further comprising:
transmitting, by the network device, the communication scenario information.

21. The method of claim 19 or 20, wherein the second monitoring metric comprises at least one of:
uplink channel information;
position information of the terminal device; or
CSI fed back by the terminal device.

22. The method of any one of claims 19 to 21, further comprising:
requesting, by the network device, the terminal device to transmit a reference signal for the scenario recognition;
receiving, by the network device, the reference signal; and
performing, by the network device, uplink channel measurement based on the reference signal to obtain an uplink channel measurement result, the uplink channel measurement result being used for performing the scenario recognition by the network device.

23. The method of any one of claims 19 to 21, further comprising:
transmitting, by the network device to the terminal device, a CSI feedback configuration for the scenario recognition;
receiving, by the network device, a CSI fed back by the terminal device based on the CSI feedback configuration, the CSI being used for performing the scenario recognition by the network device.

24. The method of any one of claims 1 to 18, further comprising:
receiving, by the network device, the communication scenario information.

25. A method for determining a channel-state information (CSI) acquisition scheme, comprising:
determining, by a terminal device, the CSI acquisition scheme corresponding to communication scenario information, the communication scenario information comprising a scenario to which a wireless communication environment between the terminal device and a network device belongs.

26. The method of claim 25, wherein the CSI acquisition scheme comprises an artificial intelligence (AI) model for CSI acquisition and/or a non-AI feedback scheme for CSI acquisition, wherein the AI model for CSI acquisition comprises at least one of:
a CSI feedback model; or
a channel estimation model.

27. The method of claim 25 or 26, wherein determining, by the terminal device, the CSI acquisition scheme corresponding to the communication scenario information comprises:
selecting, by the terminal device, the CSI acquisition scheme based on the communication scenario information.

28. The method of claim 27, further comprising:
transmitting, by the terminal device, information related to the CSI acquisition scheme selected by the terminal device.

29. The method of claim 28, wherein the information related to the CSI acquisition scheme is carried by at least one of:
a radio resource control (RRC) message, uplink control information (UCI) or a physical uplink shared channel (PUSCH).

30. The method of claim 25, wherein determining, by the terminal device, the CSI acquisition scheme corresponding to the communication scenario information comprises:
receiving, by the terminal device, information related to the CSI acquisition scheme; and
determining, by the terminal device, the CSI acquisition scheme based on the information related to the CSI acquisition scheme.

31. The method of claim 30, wherein the information related to the CSI acquisition scheme is carried by at least one of:
an RRC message, a media access control (MAC) control unit (CE), or downlink control information (DCI).

32. The method of any one of claims 28 to 31, wherein the information related to the CSI acquisition scheme is for indicating at least one of:
an identity (ID) of a CSI feedback model;
an ID of an encoder of a CSI feedback model;
an ID of a decoder of a CSI feedback model; or
an ID of a channel estimation model.

33. The method of any one of claims 25 to 32, further comprising:
acquiring, by the terminal device, at least one of: an encoder of a CSI feedback model, a decoder of a CSI feedback model, or a channel estimation model that is allowed to be used, wherein the CSI feedback model and/or the channel estimation model have/has corresponding communication scenario information.

34. The method of claim 33, wherein the CSI feedback model and/or the channel estimation model are provided by the network device, predefined by a manufacturer, or provided by a third-party device.

35. The method of claim 33 or 34, further comprising:
interacting, by the terminal device with the network device, basic information of the CSI feedback model and/or the channel estimation model, the basic information of the CSI feedback model and/or the channel estimation model comprising at least one of: an ID of the CSI feedback model, an ID of the encoder and an ID of the decoder, or an ID of the channel estimation model.

36. The method of claim 35, wherein the basic information of the CSI feedback model and/or the channel estimation model is configured by at least one of:
an RRC message;
a broadcast message;
an MAC CE;
DCI; or
UCI.

37. The method of any one of claims 25 to 36, further comprising:
triggering, by the terminal device, re-adaptation of the CSI acquisition scheme based on a third monitoring metric.

38. The method of any one of claims 25 to 36, further comprising:
transmitting, by the terminal device, trigger information based on the third monitoring metric, the trigger information being used for triggering re-adaptation of the CSI acquisition scheme by the network device.

39. The method of claim 37 or 38, wherein the third monitoring metric comprises at least one of:
data transmission performance;
position information of the terminal device;
CSI model performance of the terminal device;
a hybrid automatic repeat-request (HARQ) state; or
a channel quality condition.

40. The method of claim 39, wherein the data transmission performance comprises at least one of: a data throughput rate, a spectral efficiency, a block error rate (BLER), or a bit error rate (BER) of the terminal device.

41. The method of claim 39 or 40, wherein the HARQ state comprises a number of HARQ retransmissions and/or a frequency of HARQ retransmissions of the terminal device.

42. The method of any one of claims 39 to 41, wherein the channel quality condition comprises at least one of: a signal to noise ratio (SNR), a signal interference noise ratio (SINR), a reference signal receiving power (RSRP), a reference signal received quality (RSRQ), or a received signal strength indication (RSSI).

43. The method of any one of claims 25 to 42, further comprising:
performing, by the terminal device based on a fourth monitoring metric, scenario recognition on the wireless communication environment between the terminal device and the network device, to obtain the communication scenario information.

44. The method of claim 43, further comprising:
transmitting, by the terminal device, the communication scenario information.

45. The method of claim 43 or 44, wherein the fourth monitoring metric comprises at least one of:
downlink channel information;
position information of the terminal device; or
CSI model performance of the terminal device.

46. The method of any one of claims 43 to 45, further comprising:
requesting, by the terminal device, the network device to transmit a reference signal for the scenario recognition;
receiving, by the terminal device, the reference signal; and
performing, by the terminal device, downlink channel measurement based on the reference signal to obtain a downlink channel measurement result, the downlink channel measurement result being used for performing the scenario recognition by the terminal device.

47. The method of any one of claims 25 to 42, further comprising:
receiving, by the terminal device, the communication scenario information.

48. A network device, comprising:
a first processing unit, configured to determine a channel-state information (CSI) acquisition scheme corresponding to communication scenario information, the communication scenario information comprising a scenario to which a wireless communication environment between the network device and a terminal device belongs.

49. The network device of claim 48, wherein the CSI acquisition scheme comprises an artificial intelligence (AI) model for CSI acquisition and/or a non-AI feedback scheme for CSI acquisition, wherein the AI model for CSI acquisition comprises at least one of:
a CSI feedback model; or
a channel estimation model.

50. The network device of claim 48 or 49, wherein the first processing unit is further configured to select the CSI acquisition scheme based on the communication scenario information.

51. The network device of claim 50, further comprising:
a first transmitting unit, configured to transmit information related to the CSI acquisition scheme selected by the first processing unit.

52. The network device of claim 51, wherein the information related to the CSI acquisition scheme is carried by at least one of:
a radio resource control (RRC) message, a media access control (MAC) control unit (CE), or downlink control information (DCI).

53. The network device of claim 48 or 49, further comprising:
a first receiving unit, configured to receive information related to the CSI acquisition scheme, and
wherein the first processing unit is further configured to determine the CSI acquisition scheme based on the information related to the CSI acquisition scheme.

54. The network device of claim 53, wherein the information related to the CSI acquisition scheme is carried by at least one of:
an RRC message, uplink control information (UCI), or a physical uplink shared channel (PUSCH).

55. The network device of any one of claims 51 to 54, wherein the information related to the CSI acquisition scheme is for indicating at least one of:
an identity (ID) of a CSI feedback model;
an ID of an encoder of a CSI feedback model;
an ID of a decoder of a CSI feedback model; or
an ID of a channel estimation model.

56. The network device of any one of claims 48 to 55, further comprising:
an acquisition unit, configured to acquire at least one of: an encoder of a CSI feedback model, a decoder of a CSI feedback model, or a channel estimation model that is allowed to be used, wherein the CSI feedback model and/or the channel estimation model have/has corresponding communication scenario information.

57. The network device of claim 56, wherein the CSI feedback model and/or the channel estimation model are provided by the terminal device, predefined by a manufacturer, or provided by a third-party device.

58. The network device of claim 56 or 57, further comprising:
an interaction unit, configured to: interact, with the terminal device, basic information of the CSI feedback model and/or the channel estimation model, the basic information of the CSI feedback model and/or the channel estimation model comprising at least one of: an ID of the CSI feedback model, an ID of the encoder and an ID of the decoder, or an ID of the channel estimation model.

59. The network device of claim 58, wherein the basic information of the CSI feedback model and/or the channel estimation model is configured by at least one of:
an RRC message;
a broadcast message;
an MAC CE;
DCI; or
UCI.

60. The network device of any one of claims 48 to 59, wherein the first processing unit is further configured to trigger re-adaptation of the CSI acquisition scheme based on a first monitoring metric.

61. The network device of any one of claims 48 to 59, further comprising:
a second transmitting unit, configured to transmit trigger information based on the first monitoring metric, the trigger information being used for triggering re-adaptation of the CSI acquisition scheme by the terminal device.

62. The network device of claim 60 or 61, wherein the first monitoring metric comprises at least one of:
data transmission performance;
position information of the terminal device;
a hybrid automatic repeat-request (HARQ) state; or
a channel quality condition.

63. The network device of claim 62, wherein the data transmission performance comprises a spectral efficiency and/or a data throughput rate of the terminal device.

64. The network device of claim 62 or 63, wherein the HARQ state comprises a number of HARQ retransmissions and/or a frequency of HARQ retransmissions of the terminal device.

65. The network device of any one of claims 62 to 64, wherein the channel quality condition comprises at least one of: a signal to noise ratio (SNR), a signal interference noise ratio (SINR), a reference signal receiving power (RSRP), a reference signal received quality (RSRQ), or a received signal strength indication (RSSI).

66. The network device of any one of claims 48 to 65, wherein the first processing unit is further configured to: perform, based on a second monitoring metric, scenario recognition on the wireless communication environment between the network device and the terminal device, to obtain the communication scenario information.

67. The network device of claim 66, further comprising:
a third transmitting unit, configured to transmit the communication scenario information.

68. The network device of claim 66 or 67, wherein the second monitoring metric comprises at least one of:
uplink channel information;
position information of the terminal device; or
CSI fed back by the terminal device.

69. The network device of any one of claims 66 to 68, further comprising:
a second processing unit, configured to request the terminal device to transmit a reference signal for the scenario recognition;
a second receiving unit, configured to receive the reference signal; and
a third processing unit, configured to: perform uplink channel measurement based on the reference signal to obtain an uplink channel measurement result, the uplink channel measurement result being used for performing the scenario recognition by the network device.

70. The network device of any one of claims 66 to 68, further comprising:
a fourth transmitting unit, configured to transmit a CSI feedback configuration for the scenario recognition to the terminal device; and
a third receiving unit, configured to receive CSI fed back by the terminal device based on the CSI feedback configuration, the CSI being used for performing the scenario recognition by the network device.

71. The network device of any one of claims 48 to 65, further comprising:
a fourth receiving unit, configured to receive the communication scenario information.

72. A terminal device, comprising:
a first processing unit, configured to determine a channel-state information (CSI) acquisition scheme corresponding to communication scenario information, the communication scenario information comprising a scenario to which a wireless communication environment between the terminal device and a network device belongs.

73. The terminal device of claim 72, wherein the CSI acquisition scheme comprises an artificial intelligence (AI) model for CSI acquisition and/or a non-AI feedback scheme for CSI acquisition, wherein the AI model for CSI acquisition comprises at least one of:
a CSI feedback model; or
a channel estimation model.

74. The terminal device of claim 72 or 73, wherein the first processing unit is further configured to select the CSI acquisition scheme based on the communication scenario information.

75. The terminal device of claim 74, further comprising:
a first transmitting unit, configured to transmit information related to the CSI acquisition scheme selected by the first processing unit.

76. The terminal device of claim 75, wherein the information related to the CSI acquisition scheme is carried by at least one of:
a radio resource control (RRC) message, uplink control information (UCI), or a physical uplink shared channel (PUSCH).

77. The terminal device of claim 72, further comprising:
a first receiving unit, configured to receive information related to the CSI acquisition scheme, and
wherein the first processing unit is further configured to determine the CSI acquisition scheme based on the information related to the CSI acquisition scheme.

78. The terminal device of claim 77, wherein the information related to the CSI acquisition scheme is carried by at least one of:
an RRC message, a media access control (MAC) control unit (CE), or downlink control information (DCI).

79. The terminal device of any one of claims 75 to 78, wherein the information related to the CSI acquisition scheme is for indicating at least one of:
an identity (ID) of a CSI feedback model;
an ID of an encoder of a CSI feedback model;
an ID of a decoder of a CSI feedback model; or
an ID of a channel estimation model.

80. The terminal device of any one of claims 72 to 79, further comprising:
an acquisition unit, configured to acquire at least one of: an encoder of a CSI feedback model, a decoder of a CSI feedback model, or a channel estimation model that is allowed to be used, wherein the CSI feedback model and/or the channel estimation model have/has corresponding communication scenario information.

81. The terminal device of claim 80, wherein the CSI feedback model and/or the channel estimation model are provided by the network device, predefined by a manufacturer, or provided by a third-party device.

82. The terminal device of claim 80 or 81, further comprising:
an interaction unit, configured to: interact, with the network device, basic information of the CSI feedback model and/or the channel estimation model, the basic information of the CSI feedback model and/or the channel estimation model comprising at least one of: an ID of the CSI feedback model, an ID of the encoder and an ID of the decoder, or an ID of the channel estimation model.

83. The terminal device of claim 82, wherein the basic information of the CSI feedback model and/or the channel estimation model is configured by at least one of: an RRC message; a broadcast message; an MAC CE; DCI; or UCI.

84. The terminal device of any one of claims 72 to 83, wherein the first processing unit is further configured to trigger re-adaptation of the CSI acquisition scheme based on a third monitoring metric.

85. The terminal device of any one of claims 72 to 83, further comprising:
a second transmitting unit, configured to transmit trigger information based on the third monitoring metric, the trigger information being used for triggering re-adaptation of the CSI acquisition scheme by the network device.

86. The terminal device of claim 84 or 85, wherein the third monitoring metric comprises at least one of:
data transmission performance;
position information of the terminal device;
CSI model performance of the terminal device;
a hybrid automatic repeat-request (HARQ) state; or
a channel quality condition.

87. The terminal device of claim 86, wherein the data transmission performance comprises at least one of: a data throughput rate, a spectral efficiency, a block error rate (BLER), or a bit error rate (BER) of the terminal device.

88. The terminal device of claim 86 or 87, wherein the HARQ state comprises a number of HARQ retransmissions and/or a frequency of HARQ retransmissions of the terminal device.

89. The terminal device of any one of claims 86 to 88, wherein the channel quality condition comprises at least one of: a signal to noise ratio (SNR), a signal interference noise ratio (SINR), a reference signal receiving power (RSRP), a reference signal received quality (RSRQ), or a received signal strength indication (RSSI).

90. The terminal device of any one of claims 72 to 89, wherein the first processing unit is further configured to: perform, based on a fourth monitoring metric, scenario recognition on the wireless communication environment between the terminal device and the network device, to obtain the communication scenario information.

91. The terminal device of claim 90, further comprising:
a third transmitting unit, configured to transmit the communication scenario information.

92. The terminal device of claim 90 or 91, wherein the fourth monitoring metric comprises at least one of:
downlink channel information;
position information of the terminal device; or
CSI model performance of the terminal device.

93. The terminal device of any one of claims 90 to 92, further comprising:
a second processing unit, configured to request the network device to transmit a reference signal for the scenario recognition;
a second receiving unit, configured to receive the reference signal; and
a third processing unit, configured to: perform downlink channel measurement based on the reference signal to obtain a downlink channel measurement result, the downlink channel measurement result being used for performing the scenario recognition by the terminal device.

94. The terminal device of any one of claims 72 to 89, further comprising:
a third receiving unit, configured to receive the communication scenario information.

95. A network device, comprising a processor and a memory for storing a computer program, wherein the processor is configured to call the computer program stored in the memory and run the computer program, to enable the network device to perform the method according to any one of claims 1 to 24.

96. A terminal device, comprising a processor and a memory for storing a computer program, the processor is configured to call the computer program stored in the memory and run the computer program, to enable the terminal device to perform the method according to any one of claims 25 to 47.

97. A chip, comprising a processor configured to call a computer program from a memory and run the computer program, to cause a device having mounted thereon to perform the method according to any one of claims 1 to 24 or the method according to any one of claims 25 to 47.

98. A computer-readable storage medium having stored thereon a computer program which, when being run on a device, causes the device to perform the method according to any one of claims 1 to 24 or the method according to any one of claims 25 to 47.

99. A computer program product, comprising computer program instructions that enable a computer to perform the method according to any one of claims 1 to 24 or the method according to any one of claims 25 to 47.

100. A computer program, wherein the computer program which enables a computer to perform the method according to any one of claims 1 to 24 or the method according to any one of claims 25 to 47.
